(19) Europäisches Patentamt
European Patent Office
Office européen des brevets

(11) **EP 1 759 216 B1**

(12) **EUROPÄISCHE PATENTSCHRIFT**

(45) Veröffentlichungstag und Bekanntmachung des Hinweises auf die Patenterteilung:
**17.02.2010   Patentblatt 2010/07**

(51) Int Cl.:
*G01P 21/00* (2006.01)       *G01P 15/125* (2006.01)
*G01C 25/00* (2006.01)       *G01C 19/56* (2006.01)

(21) Anmeldenummer: **05747105.4**

(22) Anmeldetag: **06.06.2005**

(86) Internationale Anmeldenummer:
**PCT/EP2005/006053**

(87) Internationale Veröffentlichungsnummer:
**WO 2005/124369 (29.12.2005 Gazette 2005/52)**

(54) **BESCHLEUNIGUNGSSENSOR UND VERFAHREN ZUM ERFASSEN EINER BESCHLEUNIGUNG**

ACCELERATION SENSOR AND METHOD FOR DETECTING ACCELERATION

CAPTEUR D'ACCELERATION ET PROCEDE POUR SAISIR UNE ACCELERATION

(84) Benannte Vertragsstaaten:
**DE FR GB IT**

(30) Priorität: **22.06.2004   DE 102004030038**

(43) Veröffentlichungstag der Anmeldung:
**07.03.2007   Patentblatt 2007/10**

(60) Teilanmeldung:
**09177402.6**

(73) Patentinhaber: **Hahn-Schickard-Gesellschaft für angewandte Forschung e.V.**
**78052 Villingen-Schwenningen (DE)**

(72) Erfinder:
• **LINK, Thomas**
  **78554 Aldingen (DE)**
• **BRAXMAIER, Markus**
  **78054 Villingen-Schwenningen (DE)**
• **GAISSER, Alexander**
  **78267 Aach (DE)**

(74) Vertreter: **Zinkler, Franz et al**
**Schoppe, Zimmermann, Stöckeler & Zinkler**
**Patentanwälte**
**Postfach 246**
**82043 Pullach bei München (DE)**

(56) Entgegenhaltungen:
DE-C1- 19 811 070       US-A- 5 900 529
US-A1- 2002 134 154

EP 1 759 216 B1

**Beschreibung**

Die vorliegende Erfindung bezieht sich auf Sensoren und insbesondere auf Inertialsensoren zum Messen einer Linearbeschleunigung oder einer Drehrate, d.h. einer Winkelgeschwindigkeit aufgrund einer Coriolisbeschleunigung.

Mikromechanische Coriolis-Drehratensensoren, also Coriolisschwingende Drehratensensoren (engl. Coriolis Vibratory Gyroscope, CVG), besitzen vielfältige Anwendungsfelder, von denen beispielsweise die Positionsbestimmung eines Automobils oder eines Flugzeugs zu nennen ist. Allgemein besitzen solche Sensoren eine bewegliche mechanische Struktur, welche zu einer periodischen Schwingung angeregt wird. Diese periodische, durch Anregung erzeugte Schwingung wird auch als primäre Schwingung bezeichnet. Erfährt der Sensor eine Drehung um eine Achse senkrecht zu der Primärschwingung oder Primärbewegung, so führt die Bewegung der Primärschwingung zu einer Coriolis-Kraft, die proportional zur Messgröße, d. h. der Winkelgeschwindigkeit, ist. Durch die Coriolis-Kraft wird eine zweite, zur Primärschwingung orthogonale Schwingung angeregt. Diese zweite, zur Primärschwingung orthogonale Schwingung wird auch als Sekundärschwingung oder Sekundärbewegung bezeichnet. Die Sekundärschwingung, die auch als Detektionsschwingung bezeichnet wird, kann durch verschiedene Messverfahren erfasst werden, wobei die erfasste Größe als Maß für die auf den Drehratensensor wirkende Drehrate dient. Um die Primärschwingung zu erzeugen, werden unter anderem thermische, piezoelektrische, elektrostatische und induktive Verfahren verwendet, welche in der Technik bekannt sind. Zu der Erfassung der Sekundärschwingung sind piezoelektrische, piezoresistive oder kapazitive Prinzipien Stand der Technik.

Drehratensensoren können auf verschiedenartigste Arten und Weisen ausgeführt werden. Alle Drehratensensoren haben jedoch gemeinsam, dass sie eine Schwingeinrichtung umfassen, die durch eine Primäranregungseinrichtung in die Primärbewegung versetzbar ist und dass sie eine Sekundärerfassungseinrichtung haben, die eine Sekundärbewegung aufgrund einer auf den Drehratensensor wirkenden Drehrate messen kann. Bei nicht-entkoppelten Sensoren führt ein und dieselbe schwingende Masse sowohl die Primärbewegung als auch die Sekundärbewegung aus. Diese Schwingeinrichtung ist dann derart ausgestaltet, dass sie eine Masse umfasst, die sowohl in der x-Richtung als auch in der y-Richtung bewegbar aufgehängt wird. Ohne Einschränkung der Allgemeinheit wird angenommen, dass die x-Richtung die Richtung der Primärbewegung oder der Primärschwingung ist, und dass die y-Richtung die Richtung der Sekundärbewegung bzw. der Sekundärschwingung ist, und dass die Drehrate auf die Schwingeinrichtung in z-Richtung wirkt.

Die WO 98/15799 offenbart Drehratensensoren mit entkoppelten Bewegungen der Schwingeinrichtung. Die Schwingeinrichtung ist in einen Primärschwinger und einen Sekundärschwinger aufgeteilt. Der Primärschwinger führt eine Schwingung in Primärrichtung durch und ist so mit dem Sekundärschwinger gekoppelt, dass die Primärschwingung auf den Sekundärschwinger übertragen wird. Der Primärschwinger ist jedoch derart an einem Substrat aufgehängt, dass er sich lediglich in Primärrichtung bewegen kann, nicht aber in Sekundärrichtung. Damit führt eine auf den Primärschwinger wirkende Coriolis-Kraft aufgrund einer Drehrate nicht dazu, dass der Primärschwinger in Sekundärrichtung ausgelenkt wird, da dieser Bewegungsfreiheitsgrad aufgrund seiner Aufhängung für den Primärschwinger nicht existiert. Dagegen ist der Sekundärschwinger derart aufgehängt, dass er sich sowohl in Primärrichtung als auch in Sekundärrichtung bewegen kann. Die Sekundärbewegung führt dazu, dass sich der Sekundärschwinger in Sekundärrichtung bewegt, wobei diese Sekundärbewegung durch die Sekundärerfassungseinrichtung erfassbar ist. Vorzugsweise ist die Sekundärerfassungseinrichtung dabei so ausgebildet, dass sie die Primärbewegung nicht erfasst, die der Sekundärschwinger ja nur deswegen ausführt, um auf die Coriolis-Kraft "sensitiv" zu sein. Die Verbindung zwischen den Primärschwinger und dem Sekundärschwinger ist ferner, um eine noch bessere Kopplung zu erreichen, derart ausgebildet, dass zwar die Primärschwingung von dem Primärschwinger auf den Sekundärschwinger übertragen wird, dass jedoch die Sekundärschwingung nicht auf den Primärschwinger zurück übertragen wird.

Ein solcher Drehratensensor, wie er aus der WO 98/15799 bekannt ist, ist in Fig. 5 dargestellt. Der Drehratensensor 500 weist einen Primärschwinger 506 auf, der über eine Primärschwingeraufhängung 504, die aus vier Verankerungen 504a und vier Federbalken 504b besteht, an einem Grundkörper (nicht gezeigt) befestigt ist. Um den Primärschwinger zu erregen, d. h. in Schwingung zu versetzen, umfasst derselbe auf zwei gegenüberliegenden Seiten jeweils eine Elektrodengruppe 508, die zu einer feststehenden Elektrodengruppe 510, d. h. zu einer mit dem Grundkörper verbundenen Elektrodengruppe 510, angeordnet ist, um einen sogenannten Comb-Drive zu bilden, um den Primärschwinger 506 anzuregen. Die Primärschwingeraufhängung 504 ist derart ausgelegt, um eine Schwingung des Primärschwingers 506 in x-Richtung zuzulassen, während eine Bewegung des Primärschwingers 506 in den beiden anderen Richtungen wirksam vermieden wird. Die Federbalken 504 weisen daher einen rechteckigen Querschnitt auf, wobei die schmale Seite des Querschnitts entlang der x-Richtung gewählt ist, während die lange Seite des Querschnitts entlang der z-Richtung verläuft. Auch hier sei angemerkt, dass zusätzlich zur Querschnittsgeometrie der Federbalken die anisotrope Steifigkeit der Primär- und Sekundärschwingeraufhängung auch durch die Anordnung mehrerer Federbalken mit gleichen Querschnittsgeometrien an entsprechenden Plätzen erreicht werden kann.

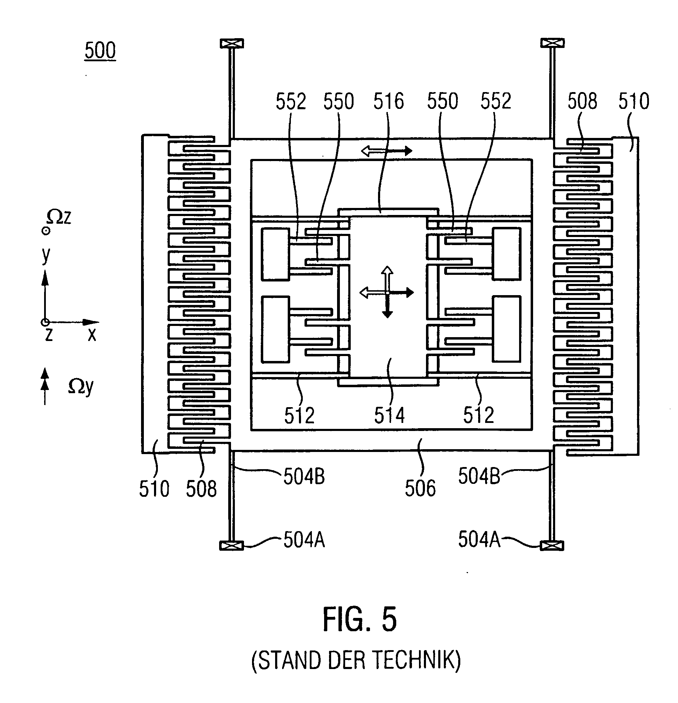

Ein Sekundärschwinger 514 ist über Sekundärschwingeraufhängungen 512 mit dem Primärschwinger 506 verbunden, wie es in Fig. 5 gezeigt ist. Der Sekundärschwinger 514 weist parallel zur x-Achse angeordnete Sekundärschwingerelektrodengruppen 550 auf, die in feststehende Sekundärschwingererfassungselektrodengruppen 552 kammartig ineinander eingreifend angeordnet sind, um eine kapazitive Erfassung der Bewegung des Sekundärschwingers 514 in y-Richtung zu ermöglichen.

Wird der Drehratensensor 500 mit einer Winkelgeschwindigkeit $\Omega_y$ um die Symmetrieachse des Sekundärschwingers 514 oder parallel zu dieser Symmetrieachse, also zu einer Achse parallel zur y-Achse, gedreht, so wirkt auf den Sekundärschwinger 514 eine Coriolis-Kraft, die zu einer im wesentlichen translatorischen Bewegung des Sekundärschwingers in z-Richtung führt. Die translatorische Bewegung des Sekundärschwingers 514 in der z-Richtung kann durch eine Erfassungselektrode 516, die unter dem Sekundärschwinger 514 angeordnet ist, kapazitiv erfasst werden.

Wird der Drehratensensor 500 mit einer Winkelgeschwindigkeit $\Omega_z$ um eine Achse, die senkrecht durch den Mittelpunkt des Sekundärschwingers 514 verläuft und zu der z-Achse parallel ist oder allgemein zu einer zu der z-Achse parallelen Achse gedreht, so wirkt auf den Sekundärschwinger eine Coriolis-Kraft, die eine Bewegung desselben in der y-Richtung veranlasst. Diese Bewegung in der y-Richtung des Sekundärschwingers 514 stellt eine translatorische Schwingung dar, da auch der Primärschwinger eine translatorische Schwingung ausführt. Die Erfassung der Bewegung des Sekundärschwingers 514 in der y-Richtung findet auf kapazitivem Wege durch die Sekundärschwingerelektrodengruppe 550 und durch die feststehenden Erfassungselektrodengruppen 552 statt. Die Federbalken 512 umfassen eine im wesentlichen quadratische Querschnittskonfiguration, da sie eine Auslenkung sowohl in der z-Richtung als auch in der y-Richtung zulassen, derart, dass eine zweiachsige Erfassung erfolgen kann. Eine Relativbewegung des Sekundärschwingers 514 und des Primärschwingers 506 wird durch die Anordnung der Federbalken 512 verhindert, welche alle parallel zur x-Achse verlaufen. Wenn der in Fig. 5 gezeigte Drehratensensor als einachsiger Sensor ausgeführt sein soll mit einer Sekundärbewegung in y-Richtung (primär in x-Richtung), so sind die Federbalkenquerschnitte rechteckförmig ausgelegt.

Die Primärschwingeraufhängung stellt sicher, dass der Primärschwinger 504 nicht durch die Coriolis-Kraft in y- oder z-Richtung bewegbar ist, da eine Bewegung des Primärschwingers in z-Richtung durch die Querschnittskonfiguration der Federbalken 504b reduziert/minimiert wird, wobei zusätzlich die Anordnung der Federbalken 504b parallel zur y-Achse eine Bewegung in y-Richtung des Primärschwingers verhindert. Ferner besitzen die Verankerungen 504a eine entsprechende Steifigkeit, damit auch sie keine Auslenkung in der y-Richtung erlauben.

Die WO 98/15799 offenbart ferner eine Vielzahl weiterer Drehratensensoren mit unterschiedlichen Arten von Primär-und Sekundärschwingungen, die darauf basieren, dass die Primärschwingung von der Sekundärschwingung entkoppelt ist. Während der in Fig. 5 gezeigte Drehratensensor sowohl in Primärrichtung als auch in Sekundärrichtung eine lineare Schwingung ausführt, sind auch andere Drehratensensoren beschrieben, und zwar solche, die in Primärrichtung eine rotatorische Bewegung ausführen und die in Sekundärrichtung ebenfalls eine rotatorische Bewegung ausführen. Alternative Drehratensensoren bestehen auch darin, dass z. B. die Primärbewegung rotatorisch ist, die Sekundärbewegung aber linear ist und umgekehrt.

Nachfolgend wird auf die allgemeine Funktionsweise mikromechanischer Drehratensensoren speziell eingegangen. Mikromechanische Drehratensensoren, bei denen das Messprinzip auf dem Corioliseffekt beruhen, lassen sich generell mit zwei gekoppelten Feder-Masse-Dämpfer- Systemen beschreiben. Während der erste Oszillator (auch als Primärschwinger oder Anregungsschwinger bezeichnet) eine Inertialmasse $m_p$ der Geschwindigkeit $v_x$ anregt, erfolgt aufgrund des Corioliseffekts eine Coriolis-Kraft, welche orthogonal zu diesem Geschwindigkeitsvektor und der sensitiven Achse der zu messenden Drehrate $\Omega_z$ verläuft:

$$\vec{F}_c = -2 \cdot m \cdot \left( \vec{\Omega}_z \times \vec{v}_x \right)$$

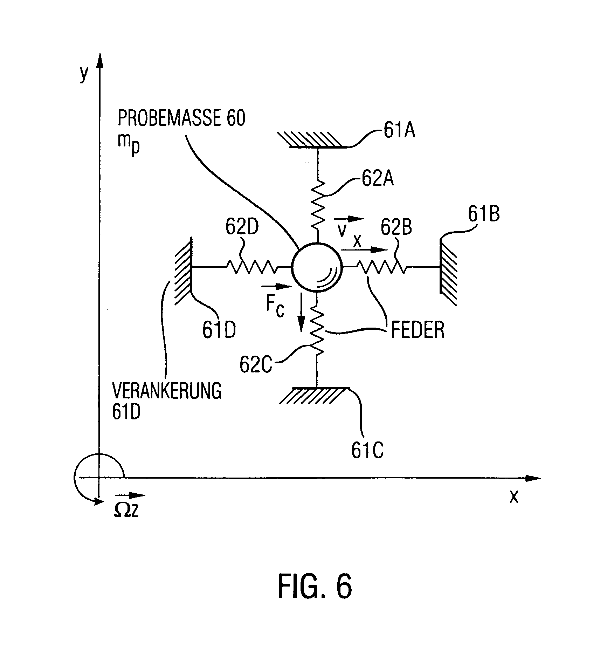

Diese Coriolis-Kraft $F_c$ wirkt auf den zweiten Oszillator (auch als Sekundärschwinger oder Detektionsschwinger bezeichnet) und bewirkt eine Auslenkung proportional zur Drehrate. Insbesondere zeigt Fig. 6 einen solchen Drehratensensor mit einer Probemasse 60, Verankerungen 61a bis 61d und Federn 62a bis 62d.

Aus dem beigefügten Koordinatensystem sind ferner die x-Richtung, die y-Richtung sowie die z-Richtung zu sehen, wobei die sensitive Achse des Sensors lediglich beispielhaft die z-Achse ist, so dass also eine zu erfassende Drehrate, wie sie in Fig. 6 dargestellt ist, eine Rotation um die senkrecht auf der Zeichenebene stehende z-Achse ist.

Allgemein lässt sich für jedes schwingungsfähige System entsprechend dem Kräftegleichgewicht eine inhomogene lineare Differentialgleichung zweiter Ordnung formulieren.

Primärschwingung (x-Richtung):

$$\ddot{x}(t) + 2\beta_p \cdot \dot{x}(t) + \omega_p^2 \cdot x(t) = \frac{F_D(t)}{m_p}$$

Sekundärschwingung (y-Richtung):

$$\ddot{y}(t) + 2\beta_s \cdot \dot{y}(t) + \omega_s^2 \cdot y(t) = \frac{F_c(t)}{m_s} + \frac{F_{feedback}(t)}{m_s}$$

Dabei sind die Parameter des Modells Masse m, die Dämpfung β und die Eigenfrequenz ω des Oszillators. Die Indizes p und s kennzeichnen die jeweilig relevanten Parameter der Primär- bzw. Sekundärschwingung. Der Primärschwinger wird mit der elektrostatischen Kraft $F_D$ angeregt. Der Sekundärschwinger wird mit der Coriolis-Kraft $F_C$ in einer Richtung orthogonal zur Primäranregung angeregt. Für einen geregelten Betrieb (closed loop) können hierbei zusätzliche Kräfte $F_{Feedback}$ aufgebracht werden.

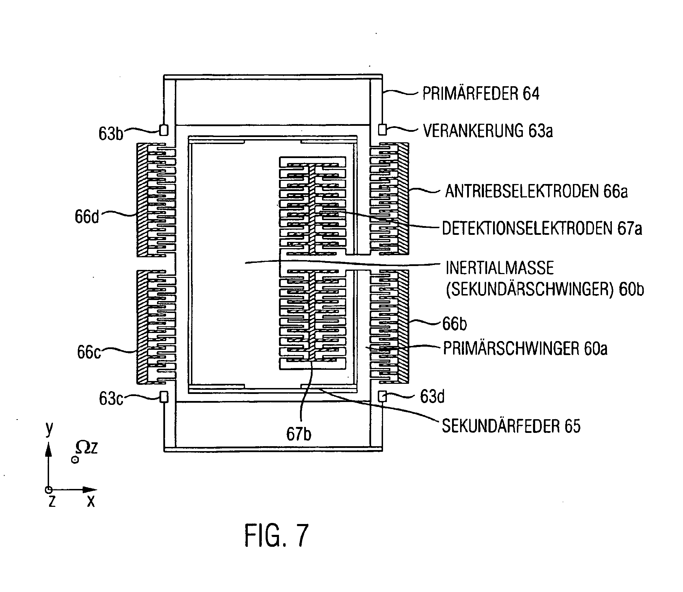

Fig. 7 zeigt eine Realisierungsform zur Messung von Drehraten basierend auf mikrotechnischen Fertigungsverfahren, wobei wieder, wie es in Fig. 7 angedeutet ist, ein System mit zweiteiliger Probemasse verwendet wird, nämlich mit einem Sekundärschwinger, der in Fig. 7 auch als Inertialmasse bezeichnet wird und das Bezugszeichen 60b hat, und mit einem Primärschwinger, der das Bezugszeichen 60a hat. Sowohl der Primärschwinger 60a als auch der Sekundärschwinger 60b werden bezüglich eines Substrats, das in Fig. 7 nicht gezeichnet ist, mittels Verankerungen 63a bis 63d gehalten. Insbesondere ist zwischen dem Primärschwinger und der einzelnen Verankerung eine Primärfeder bzw. eine Primärfederkonstruktion 64 angeordnet, um den Primärschwinger 60a so zu halten, dass er zwar in x-Richtung angeregt werden kann, dass er jedoch in y-Richtung nicht auslenkbar ist.

Die Primärfeder 64 ist somit so ausgestaltet, dass die Primärfederkonstruktion eine höhere Steifigkeit in y-Richtung aufweist als in x-Richtung.

Der Sekundärschwinger 60b ist über eine Sekundärfeder 65 mit dem Primärschwinger verbunden. Die Sekundärfeder 65 bzw. eine Sekundärfederkonstruktion ist so ausgebildet, dass der Sekundärschwinger bezüglich des Primärschwingers in y-Richtung auslenkbar ist, und dass die Primärschwingung vom Primärschwinger auf den Sekundärschwinger übertragen wird.

Der Drehratensensor umfasst Antriebselektroden-Kammstrukturen 66a, 66b, 66c und 66d, die mit entsprechenden Wechselsignalen ansteuerbar sind, und zwar phasenrichtig bezüglich der Paare 66d, 66c oder 66a, 66b, um den Primärschwinger (und damit den Sekundärschwinger) in eine Anregungsschwingung in x-Richtung zu versetzen. Diese Anregungsschwingung wird auf den Sekundärschwinger übertragen, was dann, wenn eine externe Drehrate um die z-Achse auf die Probemasse 60a, 60b ausgeübt wird, aufgrund der Coriolis-Kraft dazu führt, dass der Sekundärschwinger 60b eine Bewegung in y-Richtung ausführt, die wieder über Detektionselektroden 67a, 67b erfasst wird. Jede Kammstruktur umfasst eine feststehende Kammstruktur und eine bewegliche Kammstruktur, wobei die feststehende Kammstruktur in die bewegliche Kammstruktur ineinander eingreift.

Wie es bekannt ist, kann durch Anlegen eines Signals zwischen den stehenden Elektroden und (den) beweglichen Elektroden eine Anziehung aufgrund der elektrostatischen Kraft ausgeübt werden, die um so größer ist, je höher die angelegte Spannung ist. Dieser Effekt wird für die Antriebselektroden-Kammstrukturen verwendet. Alternativ kann aufgrund der elektrostatischen Kapazität eine Auslenkung der beweglichen Elektroden bezüglich der festen Elektroden gemessen werden. Wird beispielsweise der in Fig. 7 gezeigte Fall betrachtet, so wäre zwischen den festen und den beweglichen Elektroden ein kleiner Abstand, was zu einer hohen Kapazität führt. Wird dagegen der Sekundärschwinger nach oben in y-Richtung etwas ausgelenkt, so nimmt die Kapazität ab, um dann, wenn der Sekundärschwinger einen Richtungswechsel durchführt und sich wieder nach unten, also in negative y-Richtung bewegt, wieder zuzunehmen.

Fig. 7 zeigt somit eine Realisierungsform zur Messung von Drehraten durch den Corioliseffekt basierend auf mikrotechnischen Fertigungsverfahren. Sowohl die Primär- als auch die Sekundärschwingung erfolgen in der Ebene (bezogen auf das Substrat). Zum Antrieb der Schwingung mit der Kraft $F_D$ werden, wie es ausgeführt worden ist, die Antriebselektroden und zur Detektion der Coriolis-induzierten Bewegung die Detektionselektroden verwendet. Prinzipiell können Primär- und Sekundärschwinger vertauscht werden. Dann würde jedoch auch eine Änderung der Masseverhältnisse des Primärschwingers und des Sekundärschwingers berücksichtigt werden.

Der Preis für mikromechanische Drehratensensoren wird im wesentlichen durch die Kosten für die Fertigung des Siliziumchips, die Aufbau- und Verbindungstechnik sowie das Testen und Kalibrieren der Sensoren bestimmt. Bei größeren Stückzahlen verteilen sich die Kosten näherungsweise gleichmäßig. Der Siliziumchip sowie die Aufbau- und Verbindungstechnik betragen zusammen zwei Drittel, während das zeitintensive Testen und Kalibrieren der Drehratensensoren bis zu einem Drittel der Gesamtkosten ausmacht. Der Grund für die sehr hohen Kosten des Tests und der Kalibrierungen ist die Tatsache, dass vollständig aufgebaute Drehratensensoren üblicherweise einzeln auf einem Drehtisch auf ihre Funktionalität hin getestet und kalibriert werden müssen. Besonders kostenintensiv sind dabei Messungen über den gesamten Temperaturbereich, in dem der Drehratensensor arbeiten soll. Insbesondere für automotive Anwendungen ist dieser Temperaturbereich beträchtlich, er wird sich von Minusgraden bis zu hohen Plusgraden erstrecken, um in dem gesamten Temperaturbereich, in dem ein Kraftfahrzeug arbeitet, für eine z. B. Navigation des Fahrzeugs verfügbar zu sein.

Im Kontext mit den stetig steigenden technischen Anforderungen, besonders an die Zuverlässigkeit sowie an die Leistungsparameter, sollen mikromechanische Drehratensensoren Spezifikationen mit sehr hohen Ansprüchen genügen, welche bisher ausschließlich von faseroptischen Gyroskopen erfüllt werden, die einer Preisklasse von mehreren tausend Euro zuzuordnen sind. Beispiele für Anwendungen mit Spezifikationen hoher Ansprüche sind die meisten militärischen Anwendungen und Navigationssysteme der Luft- sowie Raumfahrt.

Neben der zeitaufwendigen einzelnen Kalibrierung der Drehratensensoren auf einem Drehtisch, der eine Drehrate für den Drehratensensor erzeugt, und der möglicherweise in einem Labor bereitsteht, ist es auch erforderlich, die Funktionalität des Sensors im Betrieb zu überwachen. Insbesondere bei mikromechanischen Drehratensensoren existieren starke Temperatureinflüsse, und zwar insbesondere dann, wenn die Schwingeinrichtung im Hinblick auf die Primärbewegung in Resonanz betrieben wird, um einen Sensor mit hoher Empfindlichkeit zu erreichen, was nur dann möglich ist, wenn die Resonanzüberhöhung aufgrund der primärseitigen Resonanz ausgenutzt wird. Eine Nachkalibrierung aufgrund der Temperaturvariationen des Sensors im normalen Betrieb fand daher dadurch statt, dass die Temperatur des Sensors gemessen wurde und aufgrund der im Labor aufgenommenen Temperaturspezifikationen eine Nachregelung stattgefunden hat. Alternativ und zusätzlich sind auch primärseitige Amplituden-und Phasenregelungen bekannt, dahingehend, dass die Primäramplitude und Primärfrequenz des Primäranregungssignals immer derart geändert werden, dass einerseits der Drehratensensor immer in primärseitiger Resonanz betrieben wird und dass andererseits die Amplitude der Primärschwingung konstant ist oder zumindest einer nachgeschalteten Auswerteelektronik bekannt ist.

Problematisch ist an diesen Maßnahmen, dass sie insbesondere im Hinblick auf die im Labor aufgenommenen Temperaturvariationen einen realen Fall lediglich annähern können, da Variationen zweiter Ordnung, wie beispielsweise ein Altern der mechanisch stark beanspruchten Struktur insgesamt nicht berücksichtigt wird. Aus diesem Grund ist es bekannt, Plausibilitätsüberprüfungen des Ausgangssignals vorzunehmen, indem die Ausleseelektronik ein Testsignal generiert, das über elektrostatische Kräfte dem Drehratensensor eine der Coriolis-Kraft entsprechende Kraft einprägt, die wiederum ein Ausgangssignal liefert. Das Testausgangssignal wird mit einem ermittelten initialen Ausgangssignal verglichen und bei zu starker Abweichung erfolgt eine Fehlermeldung. Dieser Selbsttest kann auch eine Funktionalität des Sensors durch Anlegen einer definierten Spannung an einem dafür vorgesehenen Pin umfassen.

Im Stand der Technik findet die initiale Kalibrierung daher unter Verwendung eines Drehtisches zum Erzeugen einer realen Drehrate bzw. mehrerer Drehraten statt, wobei im Betrieb eine Nachkalibrierung bislang lediglich auf der Basis von im Labor ermittelten Temperaturvariationen stattfindet. Ferner kann das Ausgangssignal des Sensors hinsichtlich seiner Plausibilität überprüft werden, um im Falle einer zu großen Abweichung eine Fehlfunktion des Sensors zu signalisieren, um den Sensor auszubauen, ins Labor zu bringen und nachzukalibrieren, oder gleich durch einen neuen (frisch kalibrierten) Sensor auszutauschen.

Nachteilig an dieser Vorgehensweise ist die Tatsache, dass zum einen, wie es ausgeführt worden ist, die Kalibrierung sehr zeit- und damit kostenintensiv ist, da ein Drehtisch benötigt wird, um den Sensor zu kalibrieren, und da ferner der gesamte Temperaturgang aufgezeichnet werden muss, um eine wenigstens annähernd gute Nachkalibrierung des Sensors im Betrieb zu erhalten.

Weiterhin nachteilig ist die Tatsache, dass dann, wenn die Plausibilitätsüberprüfung anzeigt, dass der Sensor nicht mehr plausible Ausgangssignale liefert, ein kompletter Ausbau des Sensors verbunden mit einer Nachkalibrierung bzw. einem vollständigen Ersatz nötig sein kann, was insbesondere bei automotiven Anwendungen oder auch bei Anwendungen in der Luft- und Raumfahrt wenig tolerierbar bzw. nicht möglich ist.

Das US-Patent Nr. 5,900,529 offenbart eine Vorrichtung und ein Verfahren zum Testen eines Beschleunigungssensors. Eine elektrische Erregungsvorrichtung ist in der Reaktion auf ein Erregungssignal von einem Signalgenerator aktivierbar. Damit wird eine Schwingerregung für die Beschleunigungssensoranordnung erreicht. Die Frequenz der anfänglichen Erregung wird über einen Bereich von Frequenzen von einem Frequenzsynthesizer variiert. Die Ausgabe des Beschleunigungssensors wird überwacht, und es wird ein Frequenzwert, der einer vorbestimmten Antwort im Ausgangssignal zugeordnet ist, gespeichert. Insbesondere wird mit zwei verschiedenen Frequenzen $f_1$, $f_2$ angeregt, die nahe bei der Resonanz des Beschleunigungssensors liegen, wie es insbesondere in Fig. 5 dargestellt ist.

Die DE 19811070 C1 offenbart ein Insassenschutzsystem für ein Kraftfahrzeug und ein Verfahren zum Steuern der Auslösung des Insassenschutzsystems, bei dem eine interne Fehlüberprüfung durchgeführt wird und bei Fehlererkennung dauerhaft ein einer Steuereinrichtung zugeführtes Steuersignal erzeugt wird. Bei Empfang des Meldesignals sperrt die Steuereinrichtung die Zündbereitschaft und erzeugt ein Warnsignal. Bei einem Unfall wird vor Zündung des Insassenschutzsystems das Meldesignal nochmals abgefragt, d.h., der Sensor-Zustand überprüft. Wenn der Unfallsensor keinen Fehler meldet, wird die Auslösung getriggert, andernfalls aber gesperrt.

Die US-Patentveröffentlichung 2002/0134154 A1 offenbart einen Drehratensensor für eine On-Chip-Messung von Mikro-Gyro-Skalenfaktoren. Es wird ein Drehmoment an die Messmasse des Beschleunigungssensors um eine Drehachse senkrecht zu einer Antriebsachse des Sensors angelegt, entlang oder um die eine Antriebsbewegung auf die träge Masse ausgeübt wird. Das Drehmoment wird durch eine Potentialdifferenz aufgrund von interdigitalen Fingerelektroden, mittels eines piezo-elektrischen Elements oder durch andere Einrichtungen angelegt. Die Kombination der Antriebsbewegung und des Drehmoments erzeugt eine Coriolis-Kraft, die zu einer Verschiebung eines Erfassungselements führt. Die induzierte Drehung um die Drehachse simuliert ein Winkelmoment, das in dem Gyro durch einen Präzisionsratentisch erzeugt werden würde. Diese Verschiebung ist dann ein empirischer Parameter, der das Ansprechen des Gyros auf einen simulierten Ratentischtest charakterisiert und verwendet werden kann, um einen Korrekturfaktor für das Gyroskop zu erzeugen, und das Gyroskop so zu kalibrieren.

Die Aufgabe der vorliegenden Erfindung besteht darin, ein effizienteres und fehlertoleranteres Konzept für einen Beschleunigungssensor zu schaffen.

Diese Aufgabe wird durch einen Beschleunigungssensor gemäß Patentanspruch 1, ein Verfahren zum Erfassen einer Beschleunigung gemäß Patentanspruch 18 oder ein Computerprogramm gemäß Patentanspruch 19 gelöst.

Der vorliegenden Erfindung liegt die Erkenntnis zugrunde, dass sowohl eine Kalibrierung als auch eine In-Betrieb-Funktionsüberwachung eines Beschleunigungssensors dadurch möglich werden, dass ein Beschleunigungssensor herkömmlicher Art mit einer Referenzgrößenbeaufschlagungseinrichtung versehen wird, die ausgebildet ist, um auf eine Probemasse eine definierte Referenzgröße in Richtung der sensitiven Achse des Sensors auszuüben. Ferner wird erfindungsgemäß eine Signalverarbeitungseinrichtung vorgesehen, um ein Ausgangssignal einer Erfassungseinrichtung zum Erfassen einer Auslenkung der Probemasse zu verarbeiten, um unter Verwendung von Informationen über die definierte Referenzgröße eine Reaktion der Probemasse auf die definierte Referenzgröße zu ermitteln.

Für die Probemasse wird erfindungsgemäß somit keine Simulation oder etwas ähnliches vorgenommen, sondern die Probemasse wird durch die Referenzgrößenbeaufschlagungseinrichtung tatsächlich einer echten oder "unechten" CoriolisBeschleunigung ausgesetzt, die jedoch im Gegensatz zu der zu messenden Beschleunigung eine definierte Referenzgröße ist, also im Hinblick auf irgendeine Kenngröße bekannt ist, da sie künstlich durch die Referenzgrößenbeaufschlagungseinrichtung erzeugt worden ist.

Erfindungsgemäß kann daher die "Übertragungsfunktion" des Sensors für die Referenzgröße ermittelt werden, da die Reaktion des Sensors auf die erzeugte Referenzgröße erfasst wird, so dass für eine bestimmte definierte Referenzgröße eine Reaktion des Sensors, also ein Erfassungssignal vorliegt.

Diese definierten Verhältnisse können beispielsweise dazu verwendet werden, um eine gesamte Sensorkennlinie aufzunehmen und zu Kalibrierzwecken abzuspeichern, um damit tatsächliche Messsignale vor ihrer Ausgabe zu beaufschlagen, um ein kalibriertes Ergebnis zu erhalten.

Alternativ kann die Referenzgrößenbeaufschlagungseinrichtung auch gewissermaßen im Offline-Betrieb dazu verwendet werden, um unter Verwendung einer Einprägung von zwei unterschiedlichen Referenzgrößen vorzugsweise zu zwei verschiedenen Zeitpunkten eine initiale Kalibrierung des Sensors durchzuführen, um sowohl Offset, also die Nullpunktverschiebung, als auch den Skalenfaktor entsprechend zu bestimmen, um eine korrigierte lineare Ausgangskennlinie des Sensors zu erreichen.

An dieser Stelle sei darauf hingewiesen, dass der erfindungsgemäße Sensor allgemein zur Erfassung von Beschleunigungen, also z. B. translatorischen, rotatorischen Beschleunigungen oder aber auch Coriolisbeschleunigungen dient

Das erfindungsgemäße Konzept ist jedoch besonders dann vorteilhaft, wenn die Referenzgrößenerzeugungseinrichtung verwendet wird, um im tatsächlichen Messbetrieb zu arbeiten, bei dem nicht gesagt werden kann, ob am Sensor gerade eine Beschleunigung anliegt oder nicht.

Erfindungsgemäß können jedoch aufgrund der Kenntnis über die definierte Referenzgröße der Messanteil einerseits und der Referenzanteil andererseits aus dem Erfassungssignal extrahiert werden, so dass die Referenzmessung zur normalen Messung gewissermaßen immer "im Hintergrund mitläuft". Wenn eine bestimmte definierte Referenzgröße eingeprägt wird, kann somit immer überwacht werden, ob sich der Sensor ansprechend auf diese Referenzgröße erwartungsgemäß verhält oder nicht.

Verhält er sich nicht erwartungsgemäß, so kann ohne weiteres darauf geschlossen werden, dass die Ausgangssignale des Sensors mit Vorsicht zu genießen sind. Damit wird also ein Funktions- und Plausibilitätstest zur Kontrolle von Messdaten erreicht.

Des weiteren kann der Referenzanteil jedoch nicht nur dazu verwendet werden, um den Messanteil zu beurteilen, also hinsichtlich seiner Plausibilität zu charakterisieren, sondern auch zur Kalibrierung des Sensorelements, beispielsweise des Nullpunkts und des Skalenfaktors, um Signaldriften durch äußere Einflüsse, wie beispielsweise die Temperatur, Alterung etc. zu reduzieren.

Der erfindungsgemäße Beschleunigungssensor ist somit insofern besonders fehlertolerant, da er es zum einen ermöglicht, Fehler, also Fehlfunktionen des Sensors typischerweise sowohl auf mechanischer Seite als auch auf elektronischer Seite zu erkennen und ggf. zu korrigieren.

Im Gegensatz zum Stand der Technik wird daher gleichzeitig zum Messsignal auch ein Korrektursignal ermittelt, das gewissermaßen eine Kontrollfunktion für das Messsignal ausüben kann.

Das erfindungsgemäße Konzept ist ferner dahin gehend effizient, dass der Sensor im Betrieb nachkorrigiert werden kann, derart, dass die Standzeiten des Sensors, also die Zeit des Sensors, die er in der Messumgebung bleiben kann, deutlich erhöht wird im Vergleich zu einem Sensor, der nach einer bestimmten Zeit ins Labor geholt werden muss, um neu kalibriert zu werden, um dann wieder eingesetzt zu werden.

Darüber hinaus erlaubt der erfindungsgemäße Sensor einen Einsatz dort, wo kein Zurückholen ins Labor mehr möglich ist, wie beispielsweise für Weltraumanwendungen etc. Bei solchen Anwendungen war es bisher äußerst problematisch, z. B. mikromechanisch gefertigte Drehratensensoren einzusetzen, da diese Temperatureffekte, Alterungserscheinungen etc. haben. Sofern der Einsatz überhaupt möglich war, war er nur für außerordentlich aufwendig hergestellte Sensoren möglich.

Erfindungsgemäß wird hier nunmehr jedoch ein alternativer Weg eingeschlagen. Vom Sensor durchgeführte Driften aufgrund Alterung, Temperaturvariationen etc. werden dem Sensor gewissermaßen "zugestanden". Allerdings wird nunmehr jedoch, um dennoch ein genaues Messsignal zu erhalten, die Probemasse einer definierten Referenzgröße ausgesetzt, um auf der Basis der Reaktion des Sensors auf die definierte Beschleunigung das driftbehaftete Ausgangssignal, das die eigentliche Messgröße darstellt, zu korrigieren.

Insbesondere dann, wenn das erfindungsgemäße Konzept auf Drehratensensoren angewendet wird, existieren weitere spezielle Vorteile. Zur initialen Kalibrierung des erfindungsgemäßen Drehratensensors wird nunmehr kein Drehtisch mehr benötigt. Stattdessen muss lediglich genau beispielsweise die Frequenz des Anregungssignals eingestellt werden, das auf die Probemasse die definierte Drehrate ausübt.

Ein weiterer Vorteil der vorliegenden Erfindung besteht darin, dass aufgrund der möglichen In-Betrieb-Nachkalibrierung keine kompletten Temperaturgänge mehr vorab im Labor aufgezeichnet werden müssen.

Ein weiterer Vorteil der vorliegenden Erfindung besteht darin, dass der Sensor im Betrieb nachkalibrierbar ist, so dass Alterungssituationen individuell Rechnung getragen werden kann, was dazu führt, dass ein Sensor erst dann ausgetauscht werden muss, wenn er mechanisch zerstört ist, nicht jedoch, wenn er lediglich die Kalibrierung verloren hat.

Erfindungsgemäß wird daher einerseits der Aufwand für die Endtests von aufgebauten Drehratensensoren durch die eigenständige Erst- bzw. initiale Kalibrierung ohne Einsatz eines Drehtisches reduziert. Andererseits wird durch die Realisierung einer vorzugsweise permanenten eigenständigen Kontrolle während des Sensorbetriebs und durch eine eigenständige Rekalibrierung ebenfalls während des Sensorbetriebs die Performance der Drehratensensoren, insbesondere die Drift der Sensorparameter Skalenfaktor und Nullpunkt verbessert.

Bei den Gesamtkosten der Drehratensensoren werden erfindungsgemäß die vergleichsweise hohen Kosten für das zeitintensive Testen sowie Kalibrieren reduziert. Insbesondere das kostenintensive Testen der Sensoren über den gesamten Temperaturbereich wird in Verbindung mit der erfindungsgemäßen Kalibrierung hinfällig, die auf der tatsächlichen Realisierung der genau quantifizierten Referenzdrehrate aufbaut. Ferner wird den stetig steigenden Anforderungen besonders an die Zuverlässigkeit sowie an die Leistungsparameter durch die Minimierung der größten Fehler bezüglich der Sensorstabilität bzw. Sensorgenauigkeit, welche durch das Driften des Skalenfaktors und des Nullpunkts entstehen, Rechnung getragen.

Bevorzugte Ausführungsbeispiele der vorliegenden Erfindung werden nachfolgend Bezug nehmend auf die beiliegenden Zeichnungen detailliert erläutert. Es zeigen:

Fig. 1    eine schematische Darstellung eines erfindungsge- mäßen Beschleunigungssensors;

Fig. 2    eine Prinzipskizze eines erfindungsgemäßen mikro- mechanischen Drehratensensors;

Fig. 3    eine bevorzugte Ausführungsform des erfindungsge- mäßen Beschleunigungssensors als Drehratensensor;

Fig. 4    ein Frequenzdiagramm zur Darstellung des für den Sensor spezifizierten Frequenzbands und der Fre- quenz der definierten Referenzgröße;

Fig. 5    ein bekannter Drehratensensor mit einem Primär- schwinger und einem Sekundärschwinger, die von- einander orthogonal entkoppelt sind;

Fig. 6    eine Prinzipsskizze für einen mikromechanischen Drehratensensor mit zwei orthogonal zueinander angeordneten Feder-Masse-Dämpfer-Systemen; und

Fig. 7    eine schematische Darstellung eines alternativen Drehratensensors mit orthogonal entkoppelten Schwingcharakteristika.

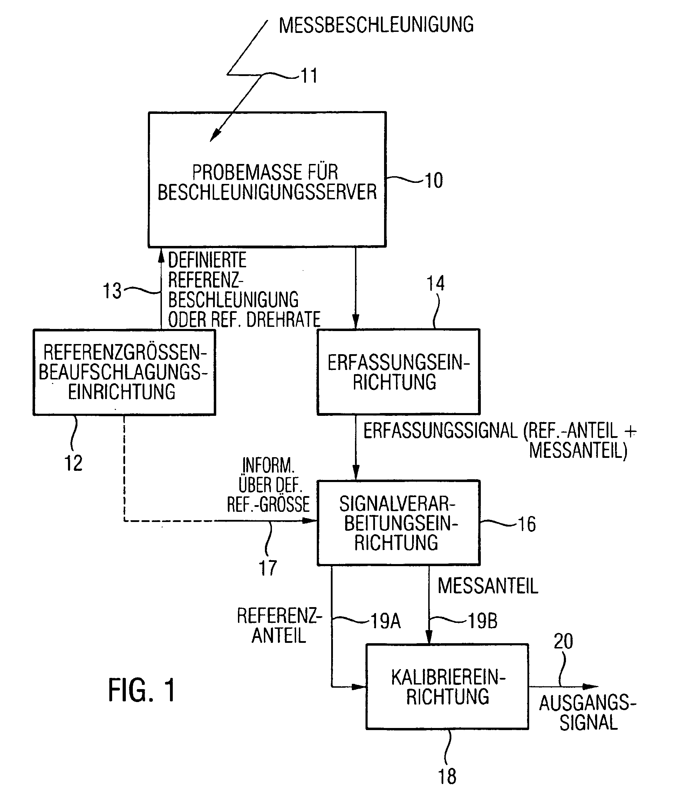

Fig. 1 zeigt eine schematische Darstellung eines erfindungsgemäßen Beschleunigungssensors. Der Sensor umfasst eine Probemasse 10, die normalerweise an einem Träger (in Fig. 1 nicht gezeigt) angebracht ist, und die ferner ausgebildet ist, um von einer bezüglich einer sensitiven Achse, welche im Hinblick auf die nachfolgend noch dargestellten Drehratensensoren ohne Einschränkung der Allgemeinheit die z-Achse ist, gerichtete Messbeschleunigung 11 bezüglich einer Ruheposition, bei der keine Messbeschleunigung anliegt, ausgelenkt zu werden. Der erfindungsgemäße Beschleunigungssensor umfasst ferner eine Referenzgrößenbeaufschlagungseinrichtung 12, die ausgebildet ist, um auf die Probemasse 10 eine definierte Referenzgröße 13 ebenfalls in Richtung der sensitiven Achse auszuüben. Dies bedeutet, dass die definierte Referenzgröße 13 und die prinzipiell zu erfassende Messbeschleunigung 11 bezüglich der selben sensitiven Achse gerichtet sind bzw., dass der Sensor Richtungskomponenten dieser beiden Beschleunigungen, die parallel zur sensitiven Achse sind, misst. Zur Unterscheidung der definierten Referenzgröße von der Messgröße ist die Referenzgröße eine definierte Referenzgröße, wobei dieses Wissen über die Referenzgröße später verwendet wird, wie es noch dargelegt wird.

Im Einzelnen umfasst der erfindungsgemäße Beschleunigungssensor eine Erfassungseinrichtung 14 zum Erfassen einer Auslenkung der Probemasse 10 aufgrund einer Beschleunigung, die in Richtung der sensitiven Achse gerichtet ist, und zum Liefern eines Erfassungssignals 15, das dann, wenn der Sensor im normalen Betrieb ist, typischerweise einen Referenzanteil und einen Messanteil umfasst.

Das Erfassungssignal 15 wird einer Signalverarbeitungseinrichtung 16 zugeführt, die ferner Informationen 17 über die definierte Referenzgröße (also eine Beschleunigung oder Drehrate) erhält, um unter Verwendung dieser Informationen über die definierte Referenzgröße das Erfassungssignal 15 zu verarbeiten, um eine Reaktion der Probemasse auf die definierte Referenzgröße, also gewissermaßen den Referenzanteil 19a und ggf. den Messanteil 19b aus dem Erfassungssignal zu erhalten. Je nach Implementierung wird der Referenzanteil 19a für verschiedene Dinge verwendet, beispielsweise auch zum Kalibrieren des Beschleunigungssensors, wobei in diesem Fall sowohl der Messanteil 19b als auch der Referenzanteil 19a einer Kalibriereinrichtung 18 zugeführt werden, um damit den Messanteil 19b zu kalibrieren, um schließlich ein kalibriertes Ausgangssignal an einem Ausgang 20 zu erhalten.

Es sei darauf hingewiesen, dass sowohl die Messbeschleunigung als auch die Referenzgröße beide auf die selbe Probemasse wirken, was dazu führt, dass dann, wenn die Messbeschleunigung gerade gleich Null ist, die Probemasse dennoch ausgelenkt wird, nämlich aufgrund der definierten Referenzgröße. Ist dagegen die zu messende Messbeschleunigung 11 nicht gleich Null, so ist die Auslenkung der Probemasse 10 eine Überlagerung einer Messauslenkung aufgrund der Messbeschleunigung 11 und einer Referenzauslenkung aufgrund der definierten Referenzgröße 13. Die Erfassungseinrichtung, die nichts von all dem weiß, sondern einfach die Auslenkung der Probemasse 10 erfasst, liefert somit ein Erfassungssignal 15, das sowohl die Informationen über die Messbeschleunigung als auch Informationen über die definierte Referenzgröße umfasst.

Da die Referenzgröße synthetisch erzeugt worden ist, ist sie im Hinblick auf eine oder mehrere Kenngrößen, wie beispielsweise Frequenz, Amplitude, Zeit oder Frequenz/Amplitude-Zeit-Verlauf, bekannt. Diese bestimmte Kenngröße wird sich in irgendeiner Weise als Signalkomponente im Erfassungssignal äußern, so dass durch Signalverarbeitung unter Verwendung von Informationen über die difinierte Referenzgröße der Referenzanteil aus dem Erfassungssignal wieder extrahiert werden kann, um somit unter Verwendung ein und derselben Probemasse eine Reaktion dieser Probemasse auf die Referenzgröße einerseits und die Messbeschleunigung andererseits zu ermitteln.

Bei einem bevorzugten Ausführungsbeispiel ist der Beschleunigungssensor ein Drehratensensor zum Messen einer Coriolisbeschleunigung und umfasst ferner eine Anregungseinrichtung, um die Probemasse in eine zur Detektionsauslenkung orthogonalen Anregungsschwingung zu versetzen. In diesem Fall ist die Referenzgrößenbeaufschlagungseinrichtung ausgebildet, um eine Drehrate auf die Probemasse auszuüben, die in Richtung der sensitiven Achse des Sensors gerichtet ist. Ist die Anregungsschwingung somit in x-Richtung des Sensors gerichtet, und ist die Detektionsschwingung in y-Richtung des Sensors gerichtet, so ist die Referenzgrößenbeaufschlagungseinrichtung ausgebildet, um die Probemasse in eine Rotation um die z-Achse zu versetzen. Ist die Probemasse derart ausgebildet, dass sie eine Primärmasse und eine durch eine Sekundäraufhängung getrennte Sekundärmasse umfasst, so wird es prinzipiell genügen, die Sekundärmasse der definierten Referenzgröße auszusetzen. Dies wird jedoch für spezielle mikromechanische Drehratensensoren aus Gründen der Einfachheit nicht durchgeführt. Stattdessen wird der gesamte Sensor, also auch der Primärschwinger, der definierten Referenzdrehrate ausgesetzt, was insofern nicht weiter störend ist.

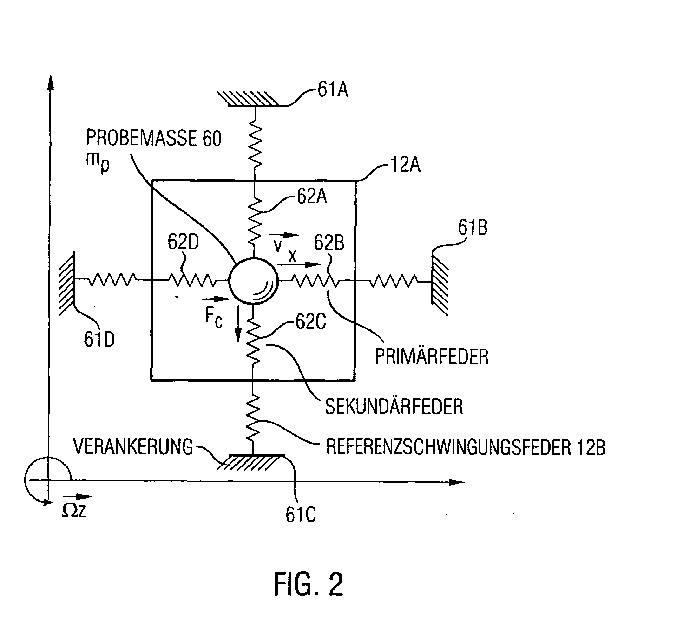

Das erfindungsgemäße Konzept besteht somit in der Aufbringung einer inertialen Größe, nämlich der Referenzdrehrate, die im Gegensatz zur Messgröße bekannt ist. Erfindungsgemäß wird die mikromechanische Struktur dabei mit dieser Referenzdrehrate in der Chip-Ebene, entsprechend der sensitiven Messachse z bzw. $\Omega_z$, angeregt. Der Drehratensensor 20 wird im Normalbetrieb betrieben. Diese Referenzgröße erzeugt nun eine zusätzliche Coriolis-Kraft, welche durch die Detektionseinheit gemessen und für Kalibriermaßnahmen herangezogen wird. Insofern zeigt Fig. 2 eine Prinzipskizze eines mikromechanischen Drehratensensors bestehend aus zwei orthogonal zueinander angeordneten Feder-Masse-Dämpfer-Systemen, welche durch die Coriolis-Kraft miteinander gekoppelt sind. Bei dem in Fig. 2 gezeigten Ausführungsbeispiel ist im Gegensatz zu dem bekannten in Fig. 6 dargestellten Drehratensensor auf mechanischer Seite die Referenzgrößenbeaufschlagungseinrichtung in Form eines Referenzschwingers 12a, von Referenzschwingungsfedern 12b und einer in Fig. 2 nicht gezeigten Anregungseinheit zum Anregen des Referenzschwingers 12a in eine Drehung um die z-Achse ausgebildet.

Die Probemasse 60 merkt nicht, ob sie aufgrund der Referenzgrößenbeaufschlagungseinrichtung 12 oder aufgrund der externen Messdrehrate um die z-Achse gedreht wird. Das selbe gilt für die Coriolis-Kraft. Auch hier ist es gewissermaßen egal, ob sie aufgrund einer künstlich angeregten Drehrate oder einer tatsächlich zu messenden Drehrate wirkt.

Die Prinzipskizze von Fig. 2 zeigt dabei einen Basis-Drehratensensor mit der zusätzlichen Vorrichtung zur quasirotierenden Anregung um die Hochachse (z-Achse). Ausgehend von der vorstehenden Gleichung mit der Frequenz der zu messenden Drehrate ergibt sich nun ein zusätzlicher Term $F_{Cref}$ mit der Frequenz $\Omega_{ref}$ des Referenzoszillators -.

$$\ddot{y}(t) + 2\beta_s \cdot \dot{y}(t) + \omega_s^2 \cdot y(t) = \frac{F_C(t, \Omega_{ex})}{m_s} + \frac{F_{Cref}(t, \Omega_{ref})}{m_s}$$

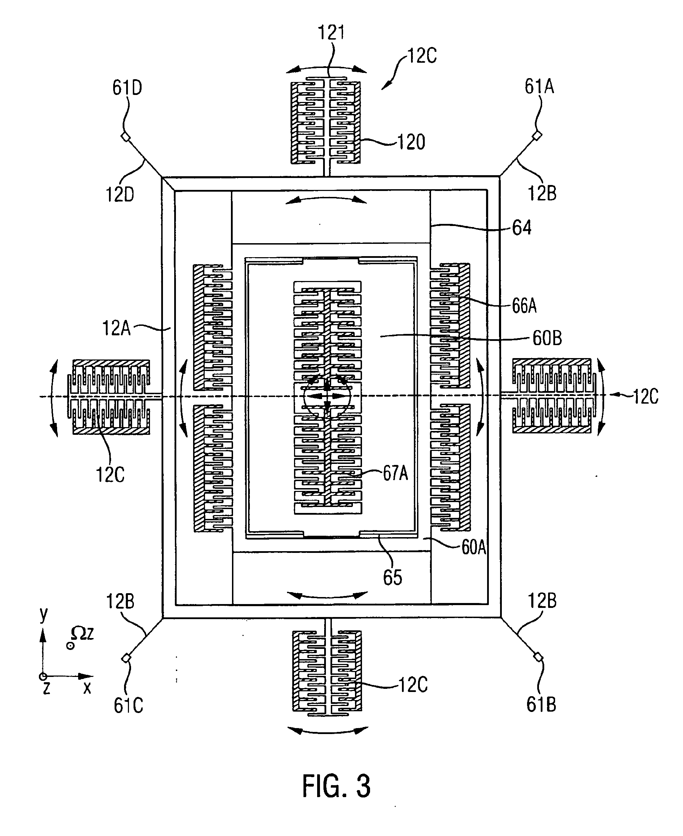

Fig. 3 zeigt die schematische Darstellung einer Struktur für referenzbildende Drehratensensoren. Im Vergleich zu dem in Fig. 7 gezeigten Ausführungsbeispiel ist hier die Referenzbeschleunigungseinrichtung in Form der Referenzschwingungsfedern 12b, des Referenzschwingers 12a und der Referenzantriebseinrichtung 12c ausgebildet.

Der Referenzantrieb umfasst vier Kammantriebsstrukturen, die aus ineinandergreifenden Elektrodengruppen bestehen, wobei eine Elektrodengruppe feststehend ist, die in Fig. 3 mit 120 bezeichnet ist, während die andere Elektrodengruppe 121 beweglich ist, und mit dem Referenzschwinger 12a verbunden ist, wie es in Fig. 3 gezeigt ist.

Die Anordnung der vier Referenzantriebseinrichtungen 12c stellt sicher, dass die gesamte Struktur in Fig. 3, also insbesondere der Referenzschwinger 12a, der Sekundärschwinger 60b und der Primärschwinger 60a in eine oszillatorische Drehbewegung versetzt werden, die prinzipiell genauso wirkt wie eine um die z-Achse gerichtete Drehrate.

Es sei darauf hingewiesen, dass die Primärfedern -64, die den Primärschwinger 60a mit dem Referenzschwinger 12a verbinden, so angeordnet sind, dass der Primärschwinger 60a bezüglich des Referenzschwingers 12a eine Primärschwingung, also eine Schwingung in x-Richtung ausführen kann, dass derselbe jedoch keine y-Schwingung (aufgrund der Coriolis-Kraft) ausführen kann.

Des weiteren wird es bevorzugt, dass die Federn 12b zum Aufhängen des Referenzschwingers 12a so ausgebildet bzw. angeordnet sind, dass der Referenzschwinger und damit alle anderen Schwinger, also auch der Primärschwinger und der Sekundärschwinger eine Drehbewegung ausführen kann, für alle anderen Bewegungen jedoch vorzugsweise möglichst starr ist.

Es sei darauf hingewiesen, dass die Detektionselektroden der Gruppe 67a und die Antriebselektroden der Elektrodengruppe 66a bei dem in Fig. 3 gezeigten Ausführungsbeispiel feststehend angeordnet sind. Durch die Anregung unter Verwendung der Referenzantriebseinrichtungen 12c wird jedoch, wie es ausgeführt worden ist, die gesamte Struktur, außer den feststehenden Elektroden der Gruppen 66a und 67a gedreht, so dass auch die beweglichen Elektroden der Gruppen 66a und 67a gewissermaßen verdreht werden. Bei der Dimensionierung der Kammantriebe wird es daher bevorzugt, darauf zu achten, dass genügend Bewegungsfreiheit der beweglichen Elektrodenschwinger zwischen den feststehenden Elektrodenfingern existiert.

Alternativ kann der in Fig. 3 gezeigte Drehratensensor gewissermaßen zweistufig aufgebaut werden, so dass auch die festen Elektrodenstrukturen der Elektrodengruppen 66a, 67a ebenfalls in eine Drehbewegung versetzt werden, und zwar durch das Antriebsmoment, das durch die Referenzantriebseinrichtungen 12c ausgeübt wird.

Aus Kostengründen wird es jedoch bevorzugt, wie es in Fig. 3 gezeigt ist, die Festelektroden nicht beweglich auszuführen, so dass der Aufwand für die Führung insgesamt verringert wird.

Wie es bereits ausgeführt worden ist, dienen die äußeren Kammstrukturen 12c zum Aufbringen der Referenzgröße mit Frequenzen typischerweise außerhalb einer spezifizierten Bandbreite für Inbetriebkalibrierungen. Wie es nachfolgend noch ausgeführt wird, kann der Einfluss der Anregung der Referenzgröße zur Messgröße durch geeignete Parameter minimiert werden.

Erfindungsgemäß wird, wie es ausgeführt worden ist, eine inertiale Referenzgröße auf Chipebene aufgebracht, um die Sensoreigenschaften zu optimieren bzw. um Störgrößen zu kompensieren.

Die Primär- (Coriolisanregung) und die Sekundärschwingung (Coriolisdetektion) werden entsprechend ihrer sensitiven Achse (Messachse) quasi-oszillierend mit einer definierten Drehratenamplitude und einer definierten Drehratenfrequenz angeregt. Hierzu ist der dritte (quasi-rotierende) Referenzoszillator vorgesehen, an dem die beiden Oszillatoren des Drehratensensors, also der Primärschwinger und der Sekundärschwinger, gekoppelt sind.

Vorzugsweise erfolgt die Realisierung des Referenzoszillators, des Anregungsoszillators (Primäroszillator) und des Detektionsoszillators (Sekundäroszillator) auf dem selben Substrat.

Das erfindungsgemäße Konzept dient insbesondere der Reduzierung von Signaldriften, wie z. B. dem Nullpunkt und dem Skalenfaktor, wobei die Signaldriften normalerweise durch äußere Einflüsse, wie beispielsweise eine Temperatur oder eine möglicherweise vorhandene Querbeschleunigungen, z.B. lineare Beschleunigungen bei Drehratensensoren, auftreten.

Ferner kann bei dem erfindungsgemäßen Konzept ein Funktions- und Plausibilitätstest zur Kontrolle der Messdaten durchgeführt werden, wobei dieser Funktions- bzw. Plausibilitätstest parallel zur eigentlichen Messung, also zeitgleich zur eigentlichen Messung stattfindet und somit durch die gleichen Störungen beeinträchtigt wird, die auch für die Messdaten problematisch sind.

Erfindungsgemäß kann ferner unter Verwendung der Referenzmessung aufgrund der definierten Referenzgröße eine Kalibrierung des Sensorelements vorgenommen werden, und zwar vor allem des Nullpunkts und des Skalenfaktors, wobei diese Kalibrierung nicht nur als initiale Kalibrierung, sondern auch während des Betriebs ohne Beeinflussung der Messgröße vorgenommen werden kann.

Insbesondere kann das erfindungsgemäße Konzept auch dazu verwendet werden, eine initiale Kalibrierung ohne Drehtisch vorzunehmen.

Nachfolgend wird Bezug nehmend auf Fig. 3 auf die initiale Kalibrierung von Drehratensensoren unter Verwendung eingeprägter Drehraten eingegangen. Es sei bereits jetzt darauf hingewiesen, dass die initiale Kalibrierung erfindungsgemäß kostengünstiger durchgeführt werden kann, da kein Drehtisch mehr benötigt wird. Selbst wenn ein Drehtisch in einem Labor bereits vorhanden ist, wird erfindungsgemäß die Kalibrierung dennoch vereinfacht, da das Plazieren der Drehratensensoren auf dem Drehtisch und das Messen der Drehratensensoren auf dem Drehtisch nicht mehr durchgeführt werden muss.

Zur Kalibrierung der Drehratensensoren werden typischerweise zwei Größen bestimmt, nämlich der Proportionalitätsfaktor zwischen der zu messenden Drehrate $\Omega$ und dem Ausgangssignal V, welcher auch als Skalenfaktor SF (der Skalenfaktor wandelt die Drehrate in eine spannungsäquivalente Größe um) bezeichnet wird, und der sogenannten Nullpunkt $NP_0$, der bei bestimmten Ausführungsformen auf einen spezifizierten Wert angepasst werden soll. Der Zusammenhang zwischen dem Ausgangssignal V, dem Skalenfaktor $SF_0$ und dem Nullpunkt $NP_0$ ist folgendermaßen gegeben:

$$V = SF_0 \cdot \Omega + NP_0$$

Der lineare Zusammenhang zwischen der Ausgangsspannung V bzw. allgemein dem Ausgangssignal V und der anliegenden Drehrate $\Omega$ bzw. der eingeprägten oder "simulierten" Drehrate $\Omega$ ist inhärent aufgrund der vorstehend dargelegten Definitionsgleichung für die Coriolis-Kraft linear. Ein Nullpunkt $NP_0$, also ein Ausgangssignal des Sensors, wenn keine Drehrate anliegt, wird für bestimmte Anwendungen benötigt. So sei beispielsweise der Fall betrachtet, bei dem das Ausgangssignal V aus äußeren Gegebenheiten heraus Werte zwischen 0 V und 5 V annehmen soll. Ferner wird es für diesen Fall beispielsweise gewünscht, dass der Drehratensensor Drehraten messen soll, die Werte zwischen $-\Omega_{max}$ und $+\Omega_{max}$ annehmen soll. In einem solchen Fall würde eine Drehrate von 0, also $\Omega = 0$, einem Wert des Ausgangssignals V von 2,5 V entsprechen. Diese Nullpunktverschiebung wird künstlich erzeugt, so dass, wie ausgeführt abhängig von äußeren Gegebenheiten, ein das Ausgangssignal V empfangender Signalverarbeitungsblock weiß, dass eine Ausgangsspannung von 0 V dem Wert $-\Omega_{max}$ entspricht, das ein Ausgangssignal von 2,5 V einer Drehrate von 0 entspricht, und dass ein Ausgangssignal von +5 V einer Drehrate von $+\Omega_{max}$ entspricht. Würde die Nullpunktverschiebung nicht vorgenommen werden, so würde das Ausgangssignal zwischen -2,5 und +2,5 V liegen. Wird für einen nachfolgenden Signalverarbeitungsblock, der das Ausgangssignal zwischen -2,5 V und +2,5 V verarbeitet, dieses Signal als geeignet betrachtet, so muss keine Nullpunktverschiebung durchgeführt werden. Eine Nullpunktverschiebung wird lediglich dann benötigt, wenn der nachgeschaltete Signalverarbeitungsblock beispielsweise mit negativen Spannungen nicht arbeiten kann oder aus bestimmten Gründen nicht arbeiten soll.

Bevor auf die vorliegende Erfindung eingegangen wird, sei zunächst eine initiale Kalibrierung mit Drehtisch beschrieben. Zur Kalibrierung des Skalenfaktors $SF_0$ unter Verwendung eines kalibrierten Drehtisches wird der Drehratensensor bei mindestens zwei unterschiedlichen Drehraten $\Omega_1$ und $\Omega_2$ betrieben, wobei üblicherweise die den Messbereich definierenden Drehraten verwendet werden. Mit den zugehörigen, resultierenden Ausgangssignalen $V_1$ und $V_2$ ergibt sich der nicht-angepasste Skalenfaktor $SF_0{}^*$ aus folgender Gleichung:

$$SF_0^{\bullet} = \frac{V_1 - V_2}{\Omega_1 - \Omega_2}$$

Der Abgleich des ermittelten Skalenfaktors SF$_0$* auf den spezifizierten Wert SF$_0$ erfolgt durch Multiplikation (bzw. Division) der Ausgangssignale mit einem geeigneten Multiplikator, der natürlich auch kleiner als 0 sein kann und somit als Divisor wirkt, welcher aus dem Verhältnis von Soll-Skalenfaktor SF$_0$ zu Ist-Skalenfaktor SF$_0$* ermittelt wird. Es ergibt sich folgende Gleichung

$$SF_0 = \frac{k_{SF} \cdot V_1 - k_{SF} \cdot V_2}{\Omega_1 - \Omega_2} \,,$$

die nach Auflösung nach dem Skalenfaktor den Multiplikator k$_{SF}$ liefert. Die Berechnung von k$_{SF}$ sowie die Multiplikation der Ausgangssignale mit k$_{SF}$ erfolgt im digitalen Signalprozessor, auf den später noch Bezug nehmend auf Fig. 1 eingegangen wird. Aufgrund der Differenzbildung zweier Signale gemäß dem vorstehenden Prozedere ist die Kenntnis des Nullpunkts zur Kalibrierung des Skalenfaktors nicht notwendig, wobei eine vernachlässigbare Drift zwischen den Messungen vorausgesetzt wird.

Die Kalibrierung des Nullpunkts NP$_0$ erfolgt durch Messung des Ausgangssignals V$_0$ ohne Anwesenheit einer Drehrate. Es resultiert der nicht-angepasste Nullpunkt NP$_0$*, der folgendermaßen definiert ist:

$$NP_0 = V(\Omega = 0) = V_0$$

Der Abgleich des ermittelten Nullpunkts NP$_0$* auf den spezifizierten Wert NP$_0$ erfolgt durch Addition (bzw. Subtraktion) des Ausgangssignals V$_0$ mit einer geeigneten Konstanten k$_{NP}$, die aus der Differenz von Soll-Nullpunkt NP$_0$* und Ist-Nullpunkt NP$_0$ ermittelt wird. Es ergibt sich der angepasste Nullpunkt NP$_0$ aus folgender Gleichung:

$$NP_0^\bullet = V_0 + k_{NP}$$

Aus der vorstehenden Gleichung ergibt sich unmittelbar die Nullpunktkonstante k$_{NP}$, indem die vorstehende Gleichung nach k$_{NP}$ aufgelöst wird. Die Berechnung von k$_{NP}$ sowie die Addition des Ausgangssignals mit k$_{NP}$ erfolgt ebenso wie die Skalenfaktorkalibrierung im digitalen Signalprozessor, wie er beispielhaft in Fig. 1 dargestellt ist. Aufgrund der Tatsache, dass die Kalibrierung des Nullpunkts ohne Anwesenheit einer Drehrate durchgeführt wird, ist die Kenntnis einer definierten Drehrate bei der initialen Kalibrierung des Nullpunkts nicht erforderlich.

Für die vorstehend beschriebene initiale Kalibrierung unter Verwendung eines Drehtisches zur Erzeugung der Drehraten $\Omega_1$ und $\Omega_2$ wird, wie es ausgeführt worden ist, ein Drehtisch benötigt. Die initiale Kalibrierung muss daher bei Laborbedingungen, und zwar im wesentlichen bei definierten und vorzugsweise konstanten Umgebungsbedingungen stattfinden.

Erfindungsgemäß wird für die initiale Kalibrierung somit kein Drehtisch mehr benötigt. Stattdessen können aufgrund der einfachen im Hinblick auf die Frequenz berechenbaren Übertragungscharakteristik der Comb-Drives eine erste und eine zweite Kalibrierdrehrate ausgeübt werden, wobei die Kalibrierdrehraten in engem Verhältnis zu der Frequenz des elektrischen Signals sind, das in die Comb-Drives angelegt ist.

Zur initialen Kalibrierung wird somit das Referenzsignal bei der Referenzfrequenz gemessen, die mit der Frequenz des elektrischen Signals, das an die Referenz-Comb-Drives angelegt ist, identisch oder zumindest im definierten Zusammenhang ist.

Damit kann die Auslenkung des Sekundärschwingers aufgrund der Anregung erfasst werden, wobei dieses Signal aufgrund der Referenzdrehrate, da sie periodisch ist, als zeitlich variables Detektionssignal mit einer Frequenz erscheint, die gleich der Referenzfrequenz ist, mit der die Comb-Drives 12c angeregt werden.

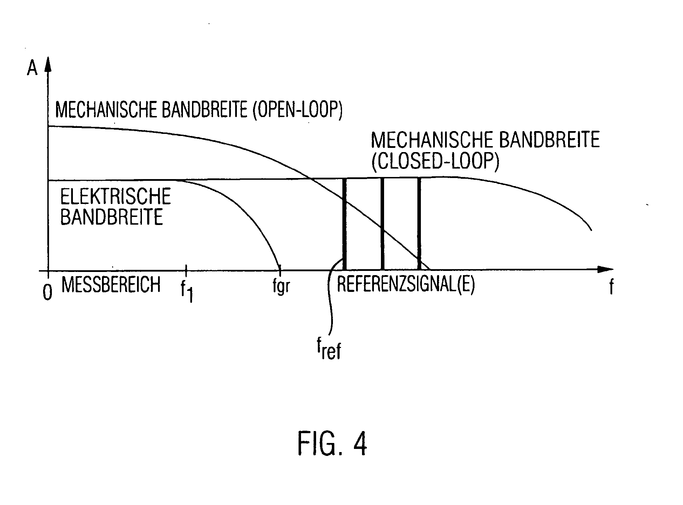

Diese Verhältnisse werden nachfolgend Bezug nehmend auf Fig. 4 detaillierter dargestellt.

Bevor detailliert auf Fig. 4 eingegangen wird, sei zunächst noch einmal auf das grundsätzliche Prinzip des erfindungsgemäßen Drehratensensors eingegangen. Wird der Drehratensensor einer konstanten Winkelgeschwindigkeit unterzogen, wird er also mit konstanter Geschwindigkeit gedreht, so ist das Ausgangssignal aufgrund dieser konstanten Drehung ein Gleichsignal mit einer bestimmten Amplitude A bei der Frequenz f=0. Ist diese Drehrate variabel, d.h. wird sie manchmal etwas schneller oder langsamer, so führt dies dazu, dass das Erfassungssignal eine -zeitvariable Komponente erhält, die sich im Frequenzbereich in einem gewissen Frequenzband äußert. Ist die äußere Drehrate eine oszillierende Drehrate mit einer bestimmten Frequenz f$_1$, so ist das Erfassungssignal ein harmonisches Signal mit der

Frequenz $f_1$. Entsprechend ist das Erfassungssignal dann ein harmonisches Signal mit der Frequenz $f_{ref}$, wenn der Referenzoszillator mit einer Frequenz $f_{ref}$ angeregt wird.

Aus Übersichtlichkeitsgründen sind in Fig. 4 drei Referenzsignale bei drei verschiedenen Referenzfrequenzen $f_{ref}$ gezeigt, wobei prinzipiell zwei unterschiedliche Werte für eine initiale Kalibrierung ausreichen würden, wobei jedoch auch insbesondere für eine genauere und besser berechenbare Kalibrierung während des Betriebs auch drei verschiedene Referenzfrequenzen eingesetzt werden können.

Der Drehratensensor hat eine mechanische Bandbreite bei offener Schleife, die durch Federn, Massen etc. festgelegt wird. Wird der Betrieb in geschlossener Schleife verwendet, wenn also die Sekundärschwingung geregelt wird, erhöht sich die mechanische Bandbreite auf Kosten einer reduzierten Amplitude hin.

Wesentlich ist, dass die Referenzfrequenz $f_{ref}$, mit der der Referenzoszillator angetrieben wird, innerhalb der nutzbaren Bandbreite liegt, damit keine Referenzfrequenz eingesetzt wird, die so schnell ist, dass das System, das z. B. in Fig. 3 gezeigt ist, dieser Frequenz nicht mehr folgen kann.

Typischerweise hat jeder Drehratensensor eine spezifizierte elektrische Bandbreite, die in Fig. 4 ebenfalls eingezeichnet ist und durch die Signalverarbeitung des Erfassungssignals typischerweise spezifiziert sein wird. Anders ausgedrückt wird mit einem Drehratensensor mit einer bestimmten elektrischen Bandbreite, wie sie in Fig. 4 gezeigt ist, nicht nach Drehraten "gesucht", die eine höhere Frequenz haben als eine Grenzfrequenz $f_{gr}$, wie sie beispielsweise in Fig. 4 eingezeichnet ist.

Vorzugsweise wird die Referenzfrequenz höher als die maximale Frequenz $f_{gr}$ gewählt, nach der mit dem vorliegenden Drehratensensor überhaupt noch gesucht werden soll.

Die Signalverarbeitungseinrichtung ist bei einem bevorzugten Ausführungsbeispiel der vorliegenden Erfindung wirksam, um die Signaltrennung von Referenzanteil und Messanteil im Erfassungssignal durch eine frequenzselektive Verarbeitung des Erfassungssignals zu erreichen, wobei unter Kenntnis der Information, dass die Frequenz des Referenzsignals außerhalb der spezifizierten (elektrischen) Bandbreite liegt, eine Filterung des Erfassungssignals durchgeführt wird.

Des weiteren wird durch das Referenzsignal die Messung selbst nicht direkt beeinflusst, wie es aus Fig. 4 zu sehen ist, da zwischen dem Referenzsignal $f_{ref}$ und dem maximal gesuchten Messsignal $f_{gr}$ noch ein gewisser Frequenzabstand existiert.

Des weiteren wird durch die Tatsache, dass bei dem bevorzugten Ausführungsbeispiel der vorliegenden Erfindung das Antriebsmoment des Referenzsignals wesentlich größer ist als das Drehmoment durch die zu messende Drehrate die gegenseitige Beeinträchtigung zusätzlich minimiert.

Zur Signalrückgewinnung der Referenzgröße, also des Referenzanteils im Messsignal wird z. B. ein Lock-In-Verstärker, der auf die Referenzfrequenz $f_{ref}$ abgestimmt ist, oder eine einfache Filterung eingesetzt.

Das erfindungsgemäße Konzept ist dahin gehend vorteilhaft, dass durch die Reduzierung von Signaldriften und die Kalibrierung des Sensorelements kostengünstigere Signalverarbeitungskonzepte mit größeren Driften in Kauf genommen werden können, da Signaldriften nachträglich korrigiert werden können, und da die Signalstabilität durch eine Kalibrierungsmöglichkeit im Betrieb erheblich verbessert wird.

Mit dem erfindungsgemäßen Konzept sind bei einem Ausführungsbeispiel Drehraten bis 100°/s erzielbar.

Ferner wird es bevorzugt, die Frequenz des Referenzoszillators größer als die Frequenz der zu messenden Drehrate (nach Spezifikation), allerdings sehr viel kleiner als die Resonanzfrequenz des Referenzoszillators zu wählen. Falls externe Drehraten (größer als Spezifikation, wie beispielsweise 100°/s) Einfluss nehmen, kann dies zu einer Veränderung des Referenzsignals führen ($\Omega$ extern = $\Omega_{ref} > \Omega_{max}$). Als Abhilfe hierfür kann eine Zufallsfolge in Amplitude und Frequenz für das Referenzsignal zur Messung von Nullpunkt und Skalenfaktor eingesetzt werden. In diesem Fall wird die Zufallsfolge entweder der Signalverarbeitungseinrichtung 16 bekannt sein, oder sie wird von der Referenzgrößenbeaufschlagungseinrichtung 12 über die in Fig. 1 gezeigte gestrichelte Verbindung zwischen dem Block 12 und dem Block 16 der Signalverarbeitungseinrichtung 16 zugeführt, damit der Referenzanteil von einem Messanteil, der für diese Betrachtung gewissermaßen wie ein Störanteil wirkt, getrennt werden kann.

Alternative Konzepte neben der frequenzselektiven Verarbeitung oder der codierten Verarbeitung können eingesetzt werden, wobei jegliche Mehrfachzugrifftechniken verwendet werden können, die in der Technik und insbesondere aus der Nachrichtentechnik bekannt sind.

Bei einem weiteren bevorzugten Ausführungsbeispiel wird eine Regelung für den Referenzoszillator bevorzugt, um die Messung nicht zu beeinflussen, und um die Referenzdrehrate konstant zu halten.

Nachfolgend werden, zum besseren Verständnis einige Kenngrößen hergeleitet, die zur Beschreibung eines Kammantriebs dienen, der z. B. als Kammantrieb 12c zur Erzeugung der Referenzgröße eingesetzt werden kann.

Die Winkelgeschwindigkeit erzeugte Referenzdrehrate $\alpha'_z$ ist proportional zur Betriebsfrequenz $\omega_{ref\_d}$ und dem Auslenkungswinkel $\alpha_{z0}$ des Referenzoszillators.

$$\dot{\alpha}_z(t) = -\omega_{ref\_d} \cdot \alpha_{z0} \sin(\omega_{ref\_d} \cdot t - \varphi)$$

$$\dot{\alpha}_z(t) = \Omega_{ref\_req} \sin(\omega_{ref\_d} \cdot t - \varphi)$$

Somit ist die Antriebsamplitude definiert als

$$\alpha_z = \left| \frac{\Omega_{ref\_req}}{\omega_{ref\_d}} \right|.$$

Unter der Annahme, dass die Betriebsfrequenz wesentlich kleiner ist als die Resonanzfrequenz des Referenzoszillators (quasi-statischer Betrieb bzw. nicht-resonanter Betrieb) ergibt sich das erforderliche Antriebsmoment $M_{z\_ref\_req}$ mit dessen Rotationssteifigkeit $k_{rz}$.

$$M_{z\_ref\_req} = k_{rz} \cdot \alpha_z$$

Die Resonanzfrequenz des Referenzoszillators $\omega_{ref}$ ergibt sich mit dem Massenträgheitsmoment $j_z$ zu

$$\omega_{ref} = \sqrt{\frac{k_{rz}}{j_z}} ,$$

wobei sich die Rotationssteifigkeit $k_{rz}$ durch

$$k_{rz} = n_{spr1} \cdot E \cdot iiy \cdot \left( \frac{12 \cdot r_{dreh}^2}{l_{spr1}^3} - \frac{12 \cdot r_{dreh}}{l_{spr1}^2} + \frac{4}{l_{spr1}} \right)$$

zusammensetzt. Hierbei ist $n_{spr1}$ die Anzahl der Referenzfedern, $E$ das Elastizitätsmodul, $r_{dreh}$ der Radius vom Mittelpunkt bis zur Referenzfeder und $l_{spr1}$ die Länge der Referenzfeder. Das Massenträgheitsmoment iiy ist gegeben als

$$iiy = \frac{h_{si} \cdot w_{spr1}^3}{12} ,$$

Mit der Rechtecksquerschnittsabmessung $h_{si}$ und $w_{spr1}$ der Referenzfeder. Das anregende Moment $M_{z-avail}$ ist näherungsweise proportional der Anzahl der Antriebsfinger $nsp\_cdfing$, der Antriebsspannung $U_{cdref0}$, dem Abstand der Antriebsfingerstrukturen $t_{cd}$, dem mittleren Abstand vom Drehmittelpunkt zum Antriebsfinger $r_{cdfing\_mean}$, der Höhe der Siliziumschicht $h_{si}$ und der Dielektrizitätskonstanten $\varepsilon$.

$$M_{ref\_z} = n_{sp\_cdfing} \cdot \frac{4 \cdot \varepsilon \cdot h_{si} \cdot U_{cdref0}^2 \cdot r_{cdfing\_mean}}{t_{cd}}$$

Die mittlere maximale Auslenkung der Elektrodenfinger $X_{cdfing\_mean}$ des Referenzoszillators ist gegeben durch

$$x_{cdfing\_mean} = \tan(\alpha_z) \cdot r_{cdfing\_mean} .$$

**Parameter**

| | |
|---|---|
| $J_z$ | Massenträgheitsmoment der z-Achse, kg m$^2$ |
| $\omega_{ref}$ | Resonanzfrequenz des Referenzoszillators [1/s] |
| $\omega_{ref\_d}$ | Antriebsfrequenz des Referenzoszillators [1/s] |
| $\Omega_{max}$ | Maximale Drehrate [°/s] |
| $\Omega_{ref\_reg}$ | Erforderliche Referenzdrehrate [°/s] |
| $\alpha_z$, | Auslenkungswinkel [°] |
| $\alpha'_z$ | Winkelgeschwindigkeit [°/s] |
| $\alpha''_z$ | Winkelbeschleunigung [°/s$^2$] |
| $r_{cdfing\_mean}$ | Mittlerer Radius des Kammantriebs des Referenzoszillators [m] |
| $X_{cdfing\_mean}$ | Mittlere Auslenkung der Kammstruktur des Referenzoszillators [m] |
| $M_{z\text{-}ref\_req}$ | Erforderliches Anregungsmoment für den Referenzoszillator [kg m$^2$] |

Je nach den praktischen Gegebenheiten kann das erfindungsgemäße Verfahren in Hardware oder in Software implementiert werden. Die Implementierung kann auf einem digitalen Speichermedium, insbesondere einer Diskette oder CD mit elektronisch auslesbaren Steuersignalen erfolgen, die so mit einem programmierbaren Computersystem zusammenwirken können, dass das Verfahren ausgeführt wird. Allgemein besteht die Erfindung somit auch in einem Computerprogrammprodukt mit einem auf einem maschinenlesbaren Träger gespeicherten Programmcode zur Durchführung des erfindungsgemäßen Verfahrens, wenn das Computerprogrammprodukt auf einem Rechner abläuft. In anderen Worten ausgedrückt stellt die Erfindung somit ein Computerprogramm mit einem Programmcode zur Durchführung des Verfahrens dar, wenn das Computerprogramm auf einem Computer abläuft.

**Patentansprüche**

1. Beschleunigungssensor, der für eine Beschleunigung in einem vordefinierten Frequenzbereich spezifiziert ist, mit folgenden Merkmalen:

einer Probemasse (10), die an einem Träger angebracht ist und die ausgebildet ist, um von einer bezüglich einer sensitiven Achse gerichteten Messbeschleunigung (11) ausgelenkt zu werden;
einer Referenzgrößenbeaufschlagungseinrichtung (12), die ausgebildet ist, um auf die Probemasse (10) eine definierte Referenzgröße (13) in Richtung der sensitiven Achse auszuüben, wobei die Referenzgröße eine Referenzbeschleunigung ist, wobei die Referenzgrößenbeaufschlagungseinrichtung (12) ausgebildet ist, um die Referenzgröße so zu definieren, dass sie außerhalb des vordefinierten Frequenzbereichs liegt;
einer Erfassungseinrichtung (14) zum Erfassen einer Auslenkung der Probemasse (10) aufgrund einer Beschleunigung, die in Richtung der sensitiven Achse gerichtet ist, und zum Liefern eines Erfassungssignals (15);
einer Signalverarbeitungseinrichtung (16) zum Verarbeiten des Erfassungssignals (15) unter Verwendung von Informationen über die definierte Referenzgröße (13), um eine Reaktion (19a) der Probemasse (10) auf die definierte Referenzgröße (13) zu ermitteln, wobei die Signalverarbeitungseinrichtung (16) ausgebildet ist, um zum Ermitteln eines Messsignals das Erfassungssignal (15) in dem vorbestimmten Frequenzbereich auszuwerten, und wobei die Signalverarbeitungseinrichtung (16) ausgebildet ist, um zum Ermitteln der Reaktion das Erfassungssignal (15) in einem Frequenzbereich auszuwerten, der den vorbestimmten Frequenzbereich nicht umfasst; und

einer Kalibriereinrichtung (18) zum Kalibrieren eines Anteils (19b) des Erfassungssignals, der auf die Messbeschleunigung (11) zurückgeht, unter Verwendung der Reaktion (19a) der Probemasse (10) auf die definierte Referenzgröße (13), und wobei die Kalibriereinrichtung (18) ausgebildet ist, um einen voreingestellten Skalenfaktorwert oder einen voreingestellten Nullpunktwert basierend auf der Reaktion (19a) der Probemasse (10) auf die definierte Referenzgröße (13) zu korrigieren.

2. Beschleunigungssensor nach Anspruch 1, bei der die Signalverarbeitungseinrichtung (16) ausgebildet ist, um das Erfassungssignal (15) frequenzselektiv zu verarbeiten, um ein Band des Erfassungssignals, das die Referenzgröße umfasst, gegenüber einem Band des Erfassungssignals, das nicht die Referenzgröße enthält, bei der Signalverarbeitung zu bevorzugen.

3. Beschleunigungssensor nach einem der vorhergehenden Ansprüche, bei dem die Referenzgrößenbeaufschlagungseinrichtung (12) ausgebildet ist, um eine definierte Folge von verschiedenen definierten Referenzgrößen über der Zeit zu verwenden; und
bei dem die Signalverarbeitungseinrichtung (16) ausgebildet ist, um das Erfassungssignal (15) unter Berücksichtigung der definierten Folge über der Zeit zu verarbeiten.

4. Beschleunigungssensor nach einem der vorhergehenden Ansprüche, bei dem die Referenzgrößenbeaufschlagungseinrichtung (12) ausgebildet ist, um eine definierte Referenzgröße in einem bestimmten Zeitintervall, in dem der Beschleunigungssensor keiner Beschleunigung ausgesetzt ist, auf die Probemasse auszuüben.

5. Beschleunigungssensor nach einem der vorhergehenden Ansprüche,
bei dem die Referenzgrößenbeaufschlagungseinrichtung (12) ausgebildet ist, um eine Referenzbeschleunigung mit zwei unterschiedliche Frequenzwerten auf die Probemasse auszuüben, und
bei dem die Signalverarbeitungseinrichtung (16) ausgebildet ist, um für jeden Frequenzwert die Reaktion der Probemasse (10) auf die Referenzbeschleunigung zu erfassen.

6. Beschleunigungssensor nach Anspruch 5, bei dem die Kalibriereinrichtung (18) ausgebildet ist, um unter Verwendung von zwei Reaktionen auf zwei Beschleunigungen einen Skalenfaktor und einen Nullpunkt einer Beschleunigungssensorkennlinie zu korrigieren.

7. Beschleunigungssensor nach einem der vorhergehenden Ansprüche, der als Drehratensensor zum Messen einer Messdrehrate ausgebildet ist,
bei dem die Probemasse (10) an den Träger angebracht ist, um eine Anregungsschwingung und eine dazu orthogonale Erfassungsschwingung ausführen zu können, wobei die Anregungsschwingung orthogonal zu der sensitiven Achse sind; und
bei dem die Referenzgrößenbeaufschlagungseinrichtung (12) ausgebildet ist, um auf die Probemasse eine Referenzdrehrate auszuüben.

8. Beschleunigungssensor nach Anspruch 7, der für eine Drehrate in einem spezifizierten Frequenzbereich ausgebildet ist, und bei dem die Referenzgrößenbeaufschlagungseinrichtung (12) ausgebildet ist, um die Referenzdrehrate mit einer Frequenz zu erzeugen, die außerhalb des spezifizierten Frequenzbereichs liegt.

9. Beschleunigungssensor nach Anspruch 8, bei dem die Signalverarbeitungseinrichtung (16) ausgebildet ist, um ein Band aus dem Erfassungssignal (15) herauszufiltern, in dem die Frequenz der Referenzdrehrate auftritt, und das das spezifizierte Frequenzband nicht umfasst.

10. Beschleunigungssensor nach Anspruch 7, 8 oder 9, bei dem die Referenzgrößenbeaufschlagungseinrichtung (12) ein Masse-Feder-System aufweist, das eine Resonanzfrequenz hat, die sich von einer Resonanzfrequenz eines Anregungs-Masse-Feder-Systems unterscheidet.

11. Beschleunigungssensor nach einem der Ansprüche 7 bis 10, bei dem die Probemasse (10) eine Primärmasse und eine Sekundärmasse aufweist, wobei die Primärmasse und die Sekundärmasse so bezüglich des Trägers gekoppelt sind, dass die Primärmasse durch eine Coriolis-Kraft weniger ausgelenkt wird als die Sekundärmasse.

12. Beschleunigungssensor nach einem der Ansprüche 7 bis 10, bei dem die Referenzgrößenbeaufschlagungseinrichtung (12) einen Referenzschwinger (12a) aufweist, der über Federn (64) mit der Probemasse gekoppelt ist, und über Federn (12b) an dem Träger so befestigt ist, dass er die Referenzdrehbewegung ausführen kann.

**13.** Beschleunigungssensor nach Anspruch 12, bei dem der Referenzschwinger (12a), ein Primärschwinger (16a) der Probemasse (10) und ein Sekundärschwinger (16b) der Probemasse (10) auf dem selben Träger ausgebildet sind.

**14.** Beschleunigungssensor nach Anspruch 13, bei dem der Träger ein Halbleitersubstrat ist.

**15.** Beschleunigungssensor nach einem der Ansprüche 7 bis 14, bei dem die Referenzgrößenbeaufschlagungseinrichtung (12) ausgebildet ist, um auf die Probemasse (10) ein Antriebsmoment auszuüben, das wenigstens doppelt so groß wie ein spezifiziertes maximal zu erwartendes Antriebsmoment aufgrund der Messdrehbeschleunigung (11) ist.

**16.** Beschleunigungssensor nach einem der Ansprüche 7 bis 15, bei dem die Referenzgrößenbeaufschlagungseinrichtung ein Feder-Masse-System umfasst, das eine mechanische Resonanzfrequenz hat, die größer als eine Frequenz einer erwarteten Messdrehrate oder eine Frequenz der Referenzdrehrate ist.

**17.** Beschleunigungssensor nach einem der vorhergehenden Ansprüche, bei dem die Referenzgrößenbeaufschlagungseinrichtung (12) einen Regler aufweist, der ausgebildet ist, um eine Ist-Referenzgröße auf einen vorbestimmten Sollwert zu regeln.

**18.** Verfahren zum Betreiben eines Beschleunigungssensors, der für eine Beschleunigung in einem vordefinierten Frequenzbereich spezifiziert ist, mit einer Probemasse (10), die an einem Träger angebracht ist und die ausgebildet ist, um von einer bezüglich einer sensitiven Achse gerichteten Messbeschleunigung (11) ausgelenkt zu werden, und einer Referenzgrößenbeaufschlagungseinrichtung (12), die ausgebildet ist, um auf die Probemasse (10) eine definierte Referenzgröße (13) in Richtung der sensitiven Achse auszuüben, wobei die Referenzgröße eine Referenzbeschleunigung ist, und wobei die Referenzgrößenbeaufschlagungseinrichtung (12) ausgebildet ist, um die Referenzgröße so zu definieren, dass sie außerhalb des vordefinierten Frequenzbereichs liegt, mit folgenden Schritten:

Erfassen einer Auslenkung der Probemasse aufgrund einer Beschleunigung, die in Richtung der sensitiven Achse gerichtet ist, und Liefern eines Erfassungssignals;

Verarbeiten des Erfassungssignals unter Verwendung von Informationen über die definierte Referenzgröße, um eine Reaktion (19a) der Probemasse (10) auf die definierte Referenzgröße (13) zu ermitteln, wobei zum Ermitteln eines Messsignals das Erfassungssignal (15) in dem vorbestimmten Frequenzbereich ausgewertet wird, und wobei zum Ermitteln der Reaktion das Erfassungssignal (15) in einem Frequenzbereich ausgewertet wird, der den vorbestimmten Frequenzbereich nicht umfasst; und

Kalibrieren (18) eines Anteils (19b) des Erfassungssignals, der auf die Messbeschleunigung (11) zurückgeht, unter Verwendung der Reaktion (19a) der Probemasse (10) auf die definierte Referenzgröße (13), durch Korrigieren eines voreingestellten Skalenfaktorwerts oder einen voreingestellten Nullpunktwerts basierend auf der Reaktion (19a) der Probemasse (10) auf die definierte Referenzgröße (13).

**19.** Computerprogramm mit einem Programmcode zum Durchführen des Verfahrens nach Patentanspruch 18, wenn der Programmcode auf einem Computer abläuft.

**Claims**

**1.** Acceleration sensor specified for acceleration in a predefined frequency range, comprising:

a test mass (10) mounted to a support and formed to be deflected by a measurement acceleration (11) directed with respect to a sensitive axis;

a reference quantity application means (12) formed to apply a defined reference quantity (13) to the test mass (10) in the direction of the sensitive axis, wherein the reference quantity is a reference acceleration, wherein the reference quantity application means (12) is formed to define the reference quantity so that it lies outside the predetermined frequency range;

a detection means (14) for detecting deflection of the test mass (10) due to acceleration directed in the direction of the sensitive axis and for providing a detection signal (15);

a signal processing means (16) for processing the detection signal (15) using information on the defined reference quantity (13), in order to determine a reaction (19a) of the test mass (10) to the defined reference quantity (13), wherein the signal processing means (16) is formed to evaluate the detection signal (15) in the predetermined frequency range for determining the measurement signal, and wherein the signal processing means (16) is formed to evaluate the detection signal (15) in a frequency range not including the predetermined frequency range for determining the reaction; and

a calibration means (18) for calibrating a portion (19b) of the detection signal that is based on the measurement acceleration (11) using the reaction (19a) of the test mass (10) to the defined reference quantity (13), and wherein the calibration means (18) is formed to correct a preset scale factor value or a preset zero-point value on the basis of the reaction (19a) of the test mass (10) to the defined reference quantity (13).

2. Acceleration sensor according to claim 1, wherein the signal processing means (16) is formed to process the detection signal (15) in a frequency-selective manner, in order to give preference to a band of the detection signal including the reference quantity against a band of the detection signal not including the reference quantity in the signal processing.

3. Acceleration sensor according to one of the preceding claims, wherein the reference quantity application means (12) is formed to use a defined series of various defined reference quantities over time; and wherein the signal processing means (16) is formed to process the detection signal (15) while taking the defined series over time into account.

4. Acceleration sensor according to one of the preceding claims, wherein the reference quantity application means (12) is formed to apply a defined reference quantity to the test mass in a certain time interval in which the acceleration sensor is not subject to any acceleration.

5. Acceleration sensor according to one of the preceding claims, wherein the reference quantity application means (12) is formed to apply a reference acceleration with two different frequency values to the test mass, and wherein the signal processing means (16) is formed to detect the reaction of the test mass (10) to the reference acceleration for each frequency value.

6. Acceleration sensor according to claim 5, wherein the calibration means (18) is formed to correct a scale factor and a zero point of an acceleration sensor characteristic curve using two reactions to two accelerations.

7. Acceleration sensor according to one of the preceding claims, which is formed as a rotation rate sensor for measuring a measurement rotation rate, wherein the test mass (10) is attached to the support so as to be able to perform an excitation vibration and a detection vibration orthogonal thereto, the excitation vibration orthogonal to the sensitive axis; and wherein the reference quantity application means (12) is formed to apply a reference rotation rate to the test mass.

8. Acceleration sensor according to claim 7, which is formed for a rotation rate in a specified frequency range, and wherein the reference quantity application means (12) is formed to generate the reference rotation rate with a frequency lying outside the specified frequency range.

9. Acceleration sensor according to claim 8, wherein the signal processing means (16) is formed to filter out, from the reception signal (15), a band in which the frequency of the reference rotation rate occurs and that does not include the specified frequency band.

10. Acceleration sensor according to claims 7, 8 or 9, wherein the reference quantity application means (12) comprises a mass-and-spring system having a resonance frequency different from a resonance frequency of an excitation mass-and-spring system.

11. Acceleration sensor according to one of claims 7 to 10, wherein the test mass (10) comprises a primary mass and a secondary mass, wherein the primary mass and the secondary mass are coupled with respect to the support so that the primary mass is deflected less than the secondary mass by a Coriolis force.

12. Acceleration sensor according to one of claims 7 to 10, wherein the reference quantity application means (12) comprises a reference vibrator (12a), which is coupled to the test mass via springs (64) and mounted to the support via springs (12b) so that it can perform the reference rotation.

13. Acceleration sensor according to claim 12, wherein the reference vibrator (12a), a primary vibrator (16a) of the test mass (10) and a secondary vibrator (16b) of the test mass (10) are formed on the same support.

**14.** Acceleration sensor according to claim 13, wherein the support is a semiconductor substrate.

**15.** Acceleration sensor according to one of claims 7 to 14, wherein the reference quantity application means (12) is formed to apply, to the test mass (10), a driving moment that is at least twice as much as a specified maximum driving moment to be expected due to the measurement rotational acceleration (11).

**16.** Acceleration sensor according to one of claims 7 to 15, wherein the reference quantity application means includes a spring-and-mass system having a mechanical resonance frequency greater than a frequency of an expected measurement rotation rate or a frequency of the reference rotation rate.

**17.** Acceleration sensor according to one of the preceding claims, wherein the reference quantity application means (12) comprises a regulator formed to regulate an actual reference quantity to a predetermined target value.

**18.** Method of operating an acceleration sensor specified for acceleration in a predefined frequency range, comprising a test mass (10) mounted to a support and formed to be deflected by a measurement acceleration (11) directed with respect to a sensitive axis, and a reference quantity application means (12) formed to apply a defined reference quantity (13) to the test mass (10) in the direction of the sensitive axis, wherein the reference quantity is a reference acceleration, and wherein the reference quantity application means (12) is formed to define the reference quantity so that it lies outside the predetermined frequency range, comprising:

detecting deflection of the test mass due to acceleration directed in the direction of the sensitive axis, and providing a detection signal;
processing the detection signal using information on the defined reference quantity, in order to determine a reaction (19a) of the test mass (10) to the defined reference quantity (13), wherein the detection signal (15) is evaluated in the predetermined frequency range for determining a measurement signal, and wherein the detection signal (15) is evaluated in a frequency range not including the predetermined frequency range for determining the reaction; and
calibrating (18) a portion (19b) of the detection signal that is based on the measurement acceleration (11) using the reaction (19a) of the test mass (10) to the defined reference quantity (13), by correcting a preset scale factor value or a preset zero-point value on the basis of the reaction (19a) of the test mass (10) to the defined reference quantity (13).

**19.** Computer program with a program code for performing the method according to claim 18, when the program code is executed on a computer.

**Revendications**

**1.** Capteur d'accélération spécifié pour une accélération dans une plage de fréquences prédéfinie, aux caractéristiques suivantes:

une masse d'essai (10) qui est placée sur un support et qui est réalisée de manière à être déviée par une accélération de mesure (11) orientée par rapport à un axe sensible;
un moyen de soumission à une grandeur de référence (12), qui est réalisé de manière à exercer sur la masse d'essai (10) une grandeur de référence définie (13) en direction de l'axe sensible, la grandeur de référence étant une accélération de référence, le moyen de soumission à une grandeur de référence (12) étant réalisé de manière à définir la grandeur de référence de sorte qu'elle se situe en dehors de la plage de fréquences prédéfinie;
un moyen de saisie (14) destiné à saisir une déviation de la masse d'essai (10) sur base d'une accélération qui est orientée en direction de l'axe sensible, et à fournir un signal de saisie (15);
un moyen de traitement de signal (16) destiné à traiter le signal de saisie (15) à l'aide d'informations sur la grandeur de référence définie (13), pour déterminer une réaction (19a) de la masse d'essai (10) à la grandeur de référence définie (13), le moyen de traitement de signal (16) étant réalisé de manière à évaluer, pour déterminer un signal de mesure, le signal de saisie (15) dans la plage de fréquences prédéterminée, et le moyen de traitement de signal (16) étant réalisé de manière à évaluer, pour déterminer la réaction, le signal de saisie (15) dans une plage de fréquences ne comprenant pas la plage de fréquences prédéterminée; et
un moyen d'étalonnage (18) destiné à étalonner une partie (19b) du signal de saisie qui se rapporte à l'accélération de mesure (11) à l'aide de la réaction (19a) de la masse d'essai (10) à la grandeur de référence définie (13), et le moyen d'étalonnage (18) étant réalisé de manière à corriger une valeur de facteur d'échelle préréglée ou une valeur de zéro préréglée sur base de la réaction (19a) de la masse d'essai (10) à la grandeur de référence définie (13).

**2.** Capteur d'accélération selon la revendication 1, dans lequel le moyen de traitement de signal (16) est réalisé de manière à traiter le signal de saisie (15) de manière sélective en fréquence, pour préférer lors du traitement de signal une bande du signal de saisie comportant la grandeur de référence à une bande du signal de saisie ne contenant pas la grandeur de référence.

**3.** Capteur d'accélération selon l'une des revendications précédentes, dans lequel le moyen de soumission à la grandeur de référence (12) est réalisé de manière à utiliser une succession définie de grandeurs de référence définies différentes dans le temps; et
dans lequel le moyen de traitement de signal (16) est réalisé de manière à traiter le signal de saisie (15) en tenant compte de la succession définie dans le temps.

**4.** Capteur d'accélération selon l'une des revendications précédentes, dans lequel le moyen de soumission à la grandeur de référence (12) est réalisé de manière à exercer sur la masse d'essai une grandeur de référence définie dans un intervalle de temps défini dans lequel le capteur d'accélération n'est pas soumis à une accélération.

**5.** Capteur d'accélération selon l'une des revendications précédentes,
dans lequel le moyen de soumission à la grandeur de référence (12) est réalisé de manière à exercer sur la masse une accélération de référence à deux valeurs de fréquence différentes, et
dans lequel le moyen de traitement de signal (16) est réalisé de manière à saisir, pour chaque valeur de fréquence, la réaction de la masse d'essai (10) à l'accélération de référence.

**6.** Capteur d'accélération selon la revendication 5, dans lequel le moyen d'étalonnage (18) est réalisé de manière à corriger, à l'aide de deux réactions à deux accélérations, un facteur d'échelle et un zéro d'une courbe de capteur d'accélération.

**7.** Capteur d'accélération selon l'une des revendications précédentes, réalisé comme capteur de vitesse de rotation destiné à mesurer une vitesse de rotation de mesure,
dans lequel la masse d'essai (10) est placée sur le support, pour pouvoir effectuer une oscillation d'excitation et une oscillation de saisie orthogonale par rapport à cette dernière, l'oscillation d'excitation étant orthogonale à l'axe sensible; et
dans lequel le moyen de soumission à la grandeur de référence (12) est réalisé de manière à exercer sur la masse d'essai une vitesse de rotation de référence.

**8.** Capteur d'accélération selon la revendication 7, réalisé pour une vitesse de rotation dans une plage de fréquences spécifiée, et dans lequel le moyen de soumission à la grandeur de référence (12) est réalisé de manière à générer la vitesse de rotation avec une fréquence située en dehors de la plage de fréquences spécifiée.

**9.** Capteur d'accélération selon la revendication 8, dans lequel le moyen de traitement de signal (16) est réalisé de manière à éliminer par filtration une bande du signal de saisie (15) dans laquelle se présente la fréquence de la vitesse de rotation de référence et ne comportant pas la bande de fréquences spécifiée.

**10.** Capteur d'accélération selon la revendication 7, 8 ou 9, dans lequel le moyen de soumission à la grandeur de référence (12) présente un système de masse et ressort ayant une fréquence de résonance différant d'une fréquence de résonance d'un système de masse et ressort d'excitation.

**11.** Capteur d'accélération selon l'une des revendications 7 à 10, dans lequel la masse d'essai (10) présente une masse primaire et une masse secondaire, la masse primaire et la masse secondaire étant couplées par rapport au support de sorte que la masse primaire soit moins déviée par une force de Coriolis que la masse secondaire.

**12.** Capteur d'accélération selon l'une des revendications 7 à 10, dans lequel le moyen de soumission à la grandeur de référence (12) présente un oscillateur de référence (12a) couplé, par l'intermédiaire de ressorts (64), à la masse d'essai et fixé, par l'intermédiaire de ressorts (12b), au support de sorte qu'il puisse effectuer le mouvement de rotation de référence.

**13.** Capteur d'accélération selon la revendication 12, dans lequel l'oscillateur de référence (12a), un oscillateur primaire (16a) de la masse d'essai (10) et un oscillateur secondaire (16b) de la masse d'essai (10) sont réalisés sur le même support.

**14.** Capteur d'accélération selon la revendication 13, dans lequel le support est un substrat à semi-conducteur.

**15.** Capteur d'accélération selon l'une des revendications 7 à 14, dans lequel le moyen de soumission à la grandeur de référence (12) est réalisé de manière à exercer sur la masse d'essai (10) un couple d'entraînement qui est au moins deux fois aussi grand qu'un couple d'entraînement à attendre maximum spécifié sur base de l'accélération de rotation de mesure (11).

**16.** Capteur d'accélération selon l'une des revendications 7 à 15, dans lequel le moyen de soumission à la grandeur de référence comporte un système de ressort et masse ayant une fréquence de résonance mécanique qui est supérieure à une fréquence d'une vitesse de rotation de mesure attendue ou qui est une fréquence de la vitesse de rotation de référence.

**17.** Capteur d'accélération selon l'une des revendications précédentes, dans lequel le moyen de soumission à la grandeur de référence (12) présente un régulateur qui est réalisé de manière à régler une grandeur de référence réelle à une valeur de consigne prédéterminée.

**18.** Procédé permettant de faire fonctionner un capteur d'accélération spécifié pour une accélération dans une plage de fréquences prédéterminée, avec une masse d'essai (10) qui est placée sur un support et qui est réalisée de manière à être déviée par une accélération de mesure (11) orientée par rapport à un axe sensible, et un moyen de soumission à une grandeur de référence (12) qui est réalisé de manière à exercer sur la masse d'essai (10) une grandeur de référence définie (13) en direction de l'axe sensible, la grandeur de référence étant une accélération de référence, et le moyen de soumission à une grandeur de référence (12) étant réalisé de manière à définir la grandeur de référence de sorte qu'elle se situe en dehors de la plage de fréquences prédéfinie, aux étapes suivantes consistant à :

saisir une déviation de la masse d'essai sur base d'une accélération orientée en direction de l'axe sensible, et fournir un signal de saisie;
traiter le signal de saisie à l'aide d'informations sur la grandeur de référence définie, pour déterminer une réaction (19a) de la masse d'essai (10) à la grandeur de référence définie (13), le signal de saisie (15) étant, pour déterminer un signal de mesure, évalué dans la plage de fréquences prédéterminée, et le signal de saisie (15) étant, pour déterminer la réaction, évalué dans une plage de fréquences ne comportant pas la plage de fréquences prédéterminée; et
étalonner (18) une partie (19b) du signal de saisie se rapportant à l'accélération de mesure (11), à l'aide de la réaction (19a) de la masse d'essai (10) à la grandeur de référence (13) définie, en corrigeant une valeur de facteur d'échelle préréglée ou une valeur de zéro préréglée sur base de la réaction (19a) de la masse d'essai (10) à la grandeur de référence définie (13).

**19.** Programme d'ordinateur avec un code de programme pour réaliser le procédé selon la revendication 18 lorsque le code de programme est exécuté sur un ordinateur.

MESSBESCHLEUNIGUNG

11

PROBEMASSE FÜR
BESCHLEUNIGUNGSSERVER

10

DEFINIERTE
REFERENZ-
BESCHLEUNIGUNG
ODER REF. DREHRATE

13

14

REFERENZGRÖSSEN-
BEAUFSCHLAGUNGS-
EINRICHTUNG

ERFASSUNGSEIN-
RICHTUNG

12

ERFASSUNGSSIGNAL (REF.-ANTEIL +
MESSANTEIL)

INFORM.
ÜBER DEF.
REF.-GRÖSSE

SIGNALVERAR-
BEITUNGSEIN-
RICHTUNG

16

17

MESSANTEIL

REFERENZ-
ANTEIL

19A

19B

20

KALIBRIEREIN-
RICHTUNG

AUSGANGS-
SIGNAL

FIG. 1

18

FIG. 2

FIG. 3

FIG. 4

500

552 550 516 550 552 508 510

Ωz

y

z x

Ωy

512 514 512

510 508 504B 506 504B

504A 504A

# FIG. 5

(STAND DER TECHNIK)

FIG. 6

PRIMÄRFEDER 64

63b — VERANKERUNG 63a

ANTRIEBSELEKTRODEN 66a

66d — DETEKTIONSELEKTRODEN 67a

INERTIALMASSE
(SEKUNDÄRSCHWINGER) 60b

66b

66c — PRIMÄRSCHWINGER 60a

63c — 63d

67b — SEKUNDÄRFEDER 65

y

Ωz

z    x

FIG. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9815799 A
- US 5900529 A
- DE 19811070 C1
- US 20020134154 A1